(19) **Europäisches Patentamt**
**European Patent Office**
**Office européen des brevets**

(11) **EP 3 968 115 B1**

(12) **EUROPEAN PATENT SPECIFICATION**

(45) Date of publication and mention
of the grant of the patent:
**18.06.2025 Bulletin 2025/25**

(21) Application number: **21175693.7**

(22) Date of filing: **25.05.2021**

(51) International Patent Classification (IPC):
**G05D 1/00** (2024.01)

(52) Cooperative Patent Classification (CPC):
**G05D 1/0272; G05D 1/0223; G05D 1/024**

(54) **MOVABLE BODY, CONTROL DEVICE, MONITORING DEVICE, CONTROL METHOD, AND STORAGE MEDIUM**

BEWEGLICHER KÖRPER, STEUERVORRICHTUNG, ÜBERWACHUNGSVORRICHTUNG, STEUERVERFAHREN UND SPEICHERMEDIUM

CORPS MOBILE, DISPOSITIF DE COMMANDE, DISPOSITIF DE SURVEILLANCE, PROCÉDÉ DE COMMANDE ET SUPPORT D'ENREGISTREMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.09.2020 JP 2020153266**

(43) Date of publication of application:
**16.03.2022 Bulletin 2022/11**

(73) Proprietor: **KABUSHIKI KAISHA TOSHIBA**
**Minato-ku**
**Tokyo**
**105-0023 (JP)**

(72) Inventors:
• **Sadamoto, Atsushi**
**Tokyo (JP)**
• **Terada, Akihito**
**Tokyo (JP)**
• **Takahashi, Hiromasa**
**Tokyo (JP)**
• **Yamamoto, Daisuke**
**Tokyo (JP)**

(74) Representative: **Hoffmann Eitle**
**Patent- und Rechtsanwälte PartmbB**
**Arabellastraße 30**
**81925 München (DE)**

(56) References cited:
EP-A1- 2 302 416          EP-A1- 3 617 828
US-A1- 2011 077 814       US-A1- 2016 236 347
US-A1- 2020 290 603

**Description**

BACKGROUND

Technical Field

Embodiments of the present invention relate to a movable body, a control device, a monitoring device, a control method, and a storage medium that stores a program.

Description of Related Art

In the related art, moving bodies such as autonomously moving (traveling) robots or transport vehicles have been put into practical use in order to save labor in transporting cargo in a distribution warehouse. Examples of a scheme for controlling traveling of a movable body include a guide scheme for causing the movable body to travel along a guide line on a floor surface, and a guideless scheme for detecting an environment around a movable body and performing autonomous control. Further, the movable body includes a non-contact obstacle detector that detects an obstacle within a monitoring area, and a control unit that stops the movable body using a detection result of the obstacle detector. This makes it possible to stop the movable body so that the movable body does not collide with an obstacle even when there is the obstacle in a traveling direction of the movable body.

Further, in recent years, a movable body including three or more drive wheels and an omnidirectional moving mechanism capable of moving in all directions has become known. For the drive wheels used in the omnidirectional movement mechanism, for example, mecanum wheels are used. The movable body that can move in all directions can instantly perform a complex operation such as moving forward, changing a direction, moving sideways, and turning on the spot. Here, there are mobile bodies including a safety control system for the purpose of protecting humans. The safety control system decelerates or stops the movable body, for example, when an obstacle within a monitoring area is detected by a sensor or the like.

Further, when a movable body is constantly detecting an object within a monitoring area as an obstacle, for example, the movable body stops when approaching a transport target object, and may not be able to achieve an original purpose of transporting a transport target object. Therefore, when the movable body travels at a predetermined velocity or lower, the movable body is regarded as having moved near the transport target object, and the monitoring area can be reduced so that the transport target object is not detected as an obstacle.

US 2020/290603 A1 relates to a mobile body, a control device, a surrounding object detector, and a monitoring device capable of controlling a safety system of a mobile body having an omnidirectional movement mechanism with a simple configuration . A mobile body includes drive wheels, a rotational velocity detector, an object detector, a controller, and a changer. The drive wheels are three or more drive wheels that allows the mobile body to move in all directions, and the respective drive wheels are driven independently. The rotational velocity detector detects respective rotational velocities of the drive wheels. The object detector detects an object around the mobile body. The controller decelerates or stops the mobile body when an object is detected in a monitoring area by the object detector. The changer changes a range of the monitoring area on the basis of the respective rotational velocities of the drive wheels detected by the rotational velocity detector.

EP 3 617 828 A1 deals with an autonomous surface treatment vehicle, e.g. a floor cleaner, with an autonomy system navigating according to a map, a scanning sensor to detect a position of an obstacle within a scanning zone and generate a detection signal. A safety system is arranged to generate a safety stop in case the detection signal indicates an obstacle within a safety zone. The safety system can enter a special mode of operation, e.g. upon request from the autonomy system, where a special safety zone selection algorithm selects the safety zone e.g. from a special set of pre-determined safety zones.

US 2011/077814 A1 relates to a safety scanner for the securing of the environment of a vehicle, in particular of a driverless transport system, comprising a light transmitter, a light deflection unit for the deflection of the light into a protected field to be monitored, a receiver for the provision of received signals in dependence on light remitted at objects present in the field of view of the scanner, an evaluation unit for the evaluation of the received signals and of the incremental encoder signals and for the provision of a safety signal, a first input connected to a vehicle speed determination unit for the reception of first signals which are representative of a vehicle speed and comprising switchover means for the safe switching over between at least two different protected fields in dependence on the vehicle speed.

US 2016/236347 A1 deals with a movable object controlling apparatus including an obstacle detecting device including circuitry which detects an obstacle, and a controlling device including circuitry which sets a monitor region with respect to a movable object, controls a speed of the movable object based on detection of the obstacle by the obstacle detecting device in the monitor region, and changes a size of the monitor region based on the speed of the movable object.

## BRIEF DESCRIPTION OF THE DRAWINGS

FIG. 1A is a diagram illustrating an example of an overall configuration of an omnidirectional movable body 1 according to a first embodiment.

FIG. 1B is a diagram illustrating a specific example of a control signal 40.

FIG. 1C is a diagram illustrating an example of an overall configuration of the omnidirectional movable body 1 according to the first embodiment.

FIG. 2 is a diagram illustrating an example of a configuration of mecanum wheels 11a to 11d.

FIG. 3 is a diagram illustrating an example of a coordinate system of the omnidirectional movable body 1 and the mecanum wheels 11a to 11d.

FIG. 4 is a diagram illustrating an example of a monitoring area 400.

FIG. 5A is a diagram illustrating an example of a changed monitoring area 400.

FIG. 5B is a diagram illustrating an example of a threshold value of an protective stop velocity.

FIG. 5C is a diagram illustrating an example of a threshold value of an protective stop velocity at the time of muting.

FIG. 6 is a diagram illustrating an example of a relationship between a velocity of the omnidirectional movable body 1 and a rotational velocity (angular velocity) of a mecanum wheel 11.

FIG. 7 is a diagram illustrating a velocity determination logic according to the first embodiment.

FIG. 8 is a flowchart illustrating a step of switching of a protection area 401 and a threshold value of protective stop velocity, which is performed by the omnidirectional movable body 1 according to the first embodiment.

FIG. 9 is a diagram illustrating a logic for switching of the protection area 401 and the threshold value of protective stop velocity according to modification example 1 of the first embodiment.

FIG. 10 is a sequence diagram illustrating a step of switching of the protection area 401 and the threshold value of protective stop velocity, which is performed by an omnidirectional movable body 1 according to modification example 1 of the first embodiment.

FIG. 11 is a diagram illustrating a logic for switching of the protection area 401 and the threshold value of protective stop velocity according to modification example 2 of the first embodiment.

FIG. 12 is a sequence diagram illustrating a step of switching of the protection area 401 and the threshold value of protective stop velocity, which is performed by the omnidirectional movable body 1 according to modification example 2 of the first embodiment.

FIG. 13 is a sequence diagram illustrating a step of switching of the protection area 401 and the threshold value of protective stop velocity, which is performed by the omnidirectional movable body 1 according to modification example 3 of the first embodiment.

FIG. 14 is a diagram illustrating a logic for switching the protection area 401 according to modification example 4 of the first embodiment.

FIG. 15 is a sequence diagram illustrating a step of switching of the protection area 401 and the threshold value of protective stop velocity, which is performed by the omnidirectional movable body 1 according to modification example 5 of the first embodiment.

FIG. 16 is a diagram illustrating an example of a coordinate system of an omnidirectional movable body 1600 and omni-wheels 1601a to 1601d.

FIG. 17 is a diagram illustrating an example of a coordinate system of an omnidirectional movable body 1700 and omni-wheels 1701a to 1701c.

FIG. 18 is a diagram illustrating a velocity determination logic according to a third embodiment.

FIG. 19 is a flowchart illustrating a step of changing a threshold value of protective stop velocity in a specific direction, which is performed by the omnidirectional movable body 1 according to a fourth embodiment.

FIG. 20 is a diagram illustrating an example of a threshold value of protective stop velocity according to the fourth embodiment.

FIG. 21 is a diagram illustrating another example of a threshold value of protective stop velocity according to the fourth embodiment.

## DETAILED DESCRIPTION

Hereinafter, a movable body, a control device, a monitoring device, a control method, and a storage medium that stores a program of embodiments will be described with reference to the drawings.

(First embodiment)

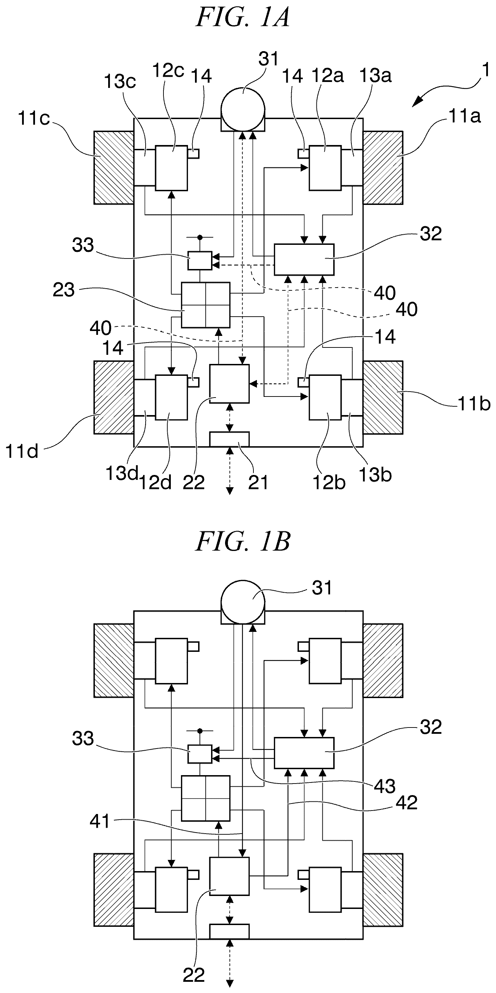

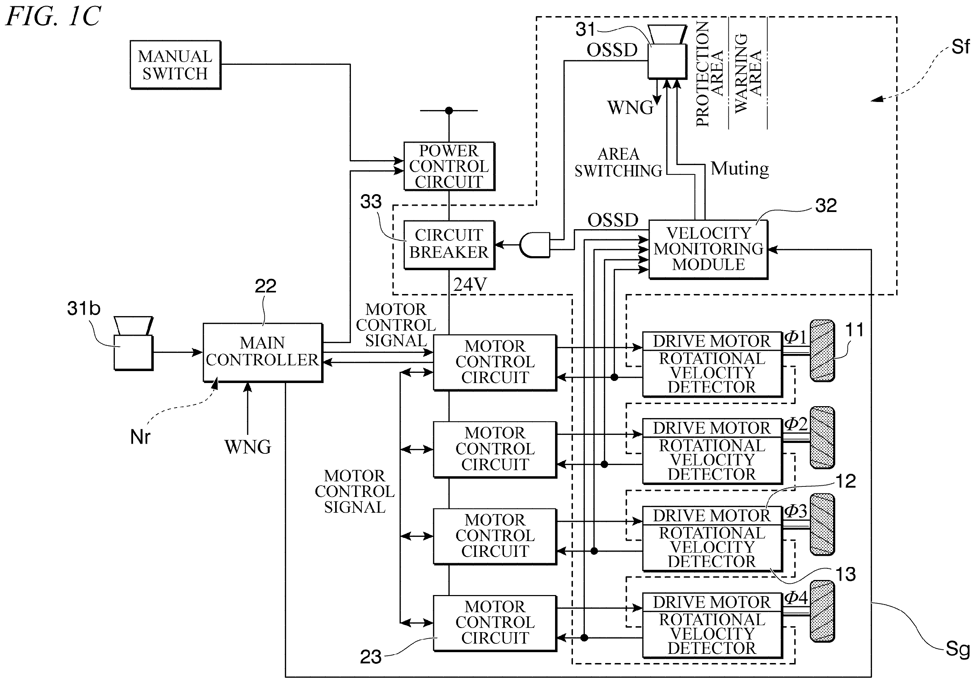

FIGS. 1A and 1C are diagrams illustrating an example of an overall configuration of an omnidirectional movable body 1 according to a first embodiment. The omnidirectional movable body 1 is a transport robot that includes an omnidirectional moving mechanism and autonomously moves (travels). Specifically, the omnidirectional movable body 1 transports a basket cart for distribution within a distribution warehouse. The omnidirectional movable body 1 includes a drive system and a control system.

First, the drive system will be described. As illustrated in FIGS. 1A and 1C, the drive system includes four mecanum wheels 11a to 11d, four drive motors 12a to 12d, and four rotational velocity detectors 13a to 13d. In the present specification, the mecanum wheels 11a to 11d are simply referred to as "mecanum wheels 11" when it is not necessary to distinguish the mecanum wheels 11a to 11d. Similarly, the drive motors 12a to 12d and the rotational velocity detectors 13a to 13d are also simply referred to as a "drive motor 12" and a "rotational velocity detector 13", respectively.

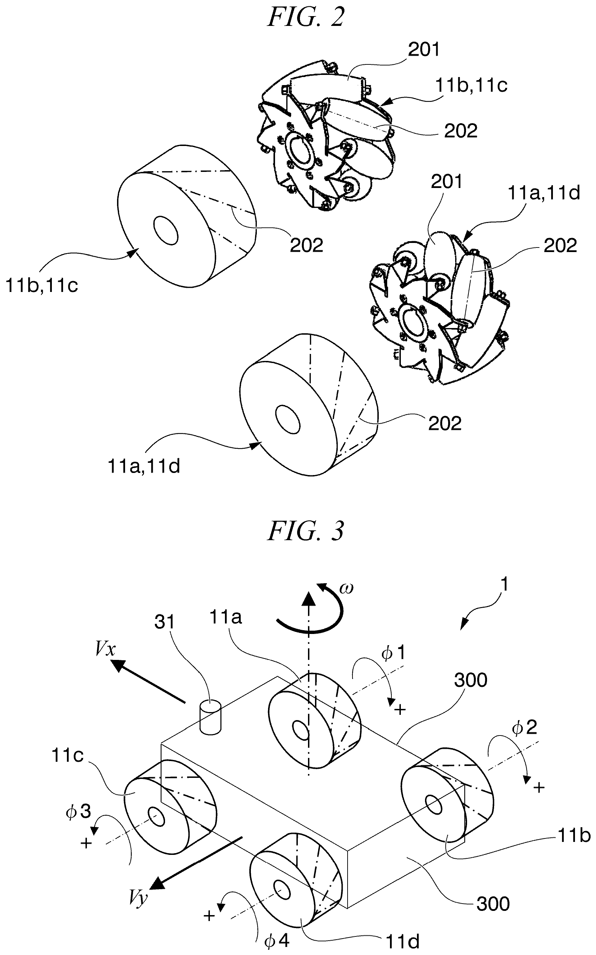

The mecanum wheels 11 allow the omnidirectional movable body 1 to instantly perform forward movement, change of direction, movement to a sideway, turning on the spot, and the like without a preparation operation by barrels provided on a wheel circumference rotating. Details of the mecanum wheel 11 will be described below with reference to FIG. 2.

The drive motor 12 generates a torque to drive the mecanum wheel 11. The drive motor 12 includes a function of a decelerator. The decelerator decelerates the rotation of the drive motor 12 (increases the torque) and transmits a rotational force to the mecanum wheel 11.

The rotational velocity detector 13 is a velocity sensor, and detects a rotational velocity of the mecanum wheel 11 and converts a rotation amount into an electrical signal. For the rotational velocity detector 13, for example, a rotary encoder is used. Further, a brake 14 for stopping the rotation of each wheel may be included. It is preferable to use the brake 14 of a type in which a braking force acts when electrical current supply to the drive motor 12 is stopped. An arrow line connecting the motor control circuit 23 and the drive motor 12 in FIG. 1A indicates a wiring for motor driving and a wiring for energizing the brake 14 when the brake 14 is used.

Next, the control system will be described. The control system includes an external communication device 21, a main controller 22, a motor control circuit 23, a safety laser scanner 31, a velocity monitoring module 32, and a circuit breaker 33. The external communication device 21 performs wireless communication with an external communication device via a network. The external communication device 21 receives a movement plan of the omnidirectional movable body 1 at a predetermined timing from an external computer device that manages all the omnidirectional mobile bodies 1 in the distribution warehouse.

The movement plan includes various types of information regarding the transport of the omnidirectional movable body 1. Specifically, the movement plan includes, for example, information on a movement route of the omnidirectional movable body 1 in a distribution warehouse, information on an area in which the omnidirectional movable body 1 travels at a low velocity, information indicating a basket cart which is a transport target object, and information indicating a transport destination of the transport target object. The external communication device 21 outputs information received from the external computer device to the main controller 22. The external communication device 21 is a communication interface. The network includes, for example, the Internet, a wide area network (WAN), a local area network (LAN), a cellular network, Wi-Fi (registered trademark), Bluetooth (registered trademark), near field communication (NFC), and infrared communication.

The safety laser scanner 31 is a sensor that detects the presence of an object around the omnidirectional movable body 1. Specifically, the safety laser scanner performs scanning with an infrared laser and measures time delay of reflected light to measure a distance to a surrounding object or a shape of the object. The safety laser scanner 31 is attached to the front side of the omnidirectional movable body 1, for example.

The safety laser scanner 31 determines whether or not there is an object in a preset area (monitoring area). When the safety laser scanner 31 determines that there is an object in the preset area, the safety laser scanner 31 outputs a stop signal for stopping a device such as the drive motor 12 to the main controller 22.

Here, an output signal of the safety laser scanner includes a non-safety signal and a safety signal. The non-safety signal is used for the purpose of protecting the omnidirectional movable body 1 through deceleration of the omnidirectional movable body 1 or the like. On the other hand, the safety signal is used as a signal for reliably stopping the omnidirectional movable body 1 when a dangerous event occurs, using a relay for shutting off power or the like. The non-safety signal is output to, for example, the main controller 22. The safety signal is output to, for example, the circuit breaker 33 or the main controller 22.

The main controller 22 outputs an operation signal for switching an operation of the omnidirectional movable body 1 to the motor control circuit 23 using the movement plan of the omnidirectional movable body 1. The main controller 22 is not limited to acquiring the movement plan wirelessly from the external communication device 21, and may acquire the movement plan through an operation input of an operator or may acquire the movement plan through cable connection to an external device.

Further, when an object is detected within the monitoring area by the safety laser scanner 31, the main controller 22 outputs an operation signal for decelerating the omnidirectional movable body 1 to the motor control circuit 23.

The motor control circuit 23 controls the rotation of the drive motor using the operation signal output from the main controller 22 to move or decelerate the omnidirectional movable body 1 at a predetermined velocity in a predetermined direction. Stopping of rotation due to inertia due to loss of a driving force of each drive motor 12, or braking torque dissipation of regenerative power in electrical resistors of the motor control circuit 23 and a drive motor system when power of the motor control circuit 23 is shut off, in addition to the control stop according to a number-of-rotations command value from the main controller 22, can be used as a means for stopping the omnidirectional movable body 1. Further, when the brake 14 is included, a braking force is generated by cutting off the energization from the motor control circuit 23 to the brake 14. This makes it possible to also stop the omnidirectional movable body 1.

Here, a control system for an autonomous mobile robot including the omnidirectional movable body 1 includes two control systems includes a normal control system Nr and a safety control system Sf, as illustrated in FIG. 1C. The normal control system Nr is a control system for detecting a situation of surrounding obstacles or the like and efficiently moving the omnidirectional movable body 1. For example, the normal control system Nr controls the operation of the omnidirectional movable body 1 from distance data obtained by the laser scanner 31b, map information, and the movement plan. In FIG. 1C, the distance data of the laser scanner 31b is used for the normal control system Nr, but distance data (non-safety signal) from the safety laser scanner can also be used. Further, the normal control system Nr performs creation of the map information using, for example, distance data from surrounding objects included in a non-safety signal from the laser scanner 31b or the safety laser scanner 31. Further, the normal control system Nr has a movement plan or a function of an interface that is operated by an operator.

In the control system of an autonomous mobile robot, it is necessary to ensure sufficient reliability for the purpose of protecting people through avoidance of accidents due to a malfunction in operation, avoidance of collisions with people who need to prioritize other operations, or the like. Sufficient reliability may not be ensured using only the function of the normal control system Nr, and it may be difficult to achieve both efficiency of transport and safety of transport therewith.

Therefore, the control system of the omnidirectional movable body 1 includes the safety control system Sf, in addition to the normal control system Nr. The safety control system Sf is a control system mainly for ensuring safety. The normal control system Nr (main controller 22) transmits an operation signal Sg such as a muting signal to the safety control system Sf (the velocity monitoring module 32). The safety control system Sf receives the operation signal to invalidate a protection area or change a threshold value of protective stop velocity.

Here, it is assumed that the muting signal is directly output to the safety laser scanner using the operation signal from the main controller 22 without the safety control system Sf (the velocity monitoring module 32) intervening. In this case, in a case in which the main controller 22 outputs the operation signal (muting signal) at the time of hanging-up, the muting signal may continue to be output and the omnidirectional movable body 1 may continue to travel in a state in which a safety function of the safety laser scanner is partially stopped. Further, there is concern that the threshold value of protective stop velocity or the like is accidentally changed due to an error or the like or an protective stop is made with the accidentally changed threshold value of protective stop velocity.

On the other hand, the safety control system Sf (the velocity monitoring module 32) has a low risk of malfunction and is less likely to fail. Even when a failure occurs, the velocity monitoring module 32 can cut off the power supplied to the motor control circuit 23 so that a safe state can be maintained. Thus, it is possible to ensure the reliability of the safety control system Sf by changing the range of the protection area 401 and the threshold value of protective stop velocity through the interposed velocity monitoring module 32.

The safety control system Sf monitors a surrounding situation using the safety laser scanner 31 and reliably stops the omnidirectional movable body 1 when approach of an object such as an obstacle is detected. In FIG. 1A, reference sign 40 indicates a control signal including the safety signal.

For example, when the safety laser scanner 31 detects an object within the protection area, the safety laser scanner 31 outputs the safety signal to the circuit breaker 33. Further, the velocity monitoring module 32 outputs the safety signal to the circuit breaker 33 when a movement velocity of the omnidirectional movable body 1 reaches the threshold value of protective stop velocity (for example, 1.1 m/s). When the safety signal is input, the circuit breaker 33 shuts off power supplied to the motor control circuit 23 to stop the driving of each mecanum wheel 11. For the stop, the rotation is stopped due to inertia due to loss of a driving force, or the stop can also be realized by generation of a braking torque due to the electrical resistors (dissipation of regenerative power) of the motor control circuit 23 and a drive motor system or use of a braking force of the brake 14 when the brake 14 is included. The circuit breaker 33 is realized by, for example, a mirror contactor. Further, although not illustrated in FIG. 1C, when the motor control circuit includes an protective stop function through an external signal input, the stop can also be realized by inputting the safety signal input to the circuit breaker 33 to the motor control circuit.

Further, the safety control system Sf is required to have robustness that does not fail for a long period of time to reliably stop the omnidirectional movable body 1 even when an abnormality occurs in the normal control system Nr, a function of detecting a failure, a function of safely stopping the omnidirectional movable body 1 at the time of failure, and the like.

Here, for example, a protection area and a warning area are set toward a distance from a center of the safety laser scanner 31 in the monitoring area. The safety laser scanner 31 can store a plurality of patterns indicating the range of the monitoring area.

The velocity monitoring module 32 switches patterns set in the safety laser scanner 31. Specifically, the velocity monitoring module 32 switches a pattern (a pattern indicating the range of the warning area or protection area) according to each of operations, such as an operation in which the omnidirectional movable body 1 travels alone, an operation in which the transport target object is transported, or an operation in which the transport target object is picked up.

Here, when the protection area (protective stop function) of the safety control system Sf always functions, the convenience of the omnidirectional movable body 1 may be hindered and an original purpose of use may not be achieved. For example, in a case in which the omnidirectional movable body 1 picks up (docks with) the transport target object, the transport target object may be detected as an obstacle and the omnidirectional movable body 1 may stop when the safety control system Sf functions. That is, it is not possible to pick up the transport target object (crawl under the transport target object) and to achieve the original purpose of transporting the transport target object in some cases.

Therefore, it is conceivable that, in a case in which the omnidirectional movable body 1 approaches the transport target object, when the safety control system Sf temporarily reduces the range of the protection area set in the safety laser scanner 31 or invalidates (mutes) the range of the protection area, it is possible to prevent the impairment of convenience. Specifically, when the omnidirectional movable body 1 becomes a predetermined velocity or lower, the velocity monitoring module 32 temporarily reduces or invalidates the protection area. Accordingly, the omnidirectional movable body 1 can pick up the transport target object.

Further, when the range of the protection area set in the safety laser scanner 31 is temporarily reduced or invalidated on the basis of a command from the normal control system Nr based on the movement plan, the safety control system Sf changes the threshold value of protective stop velocity for making an protective stop of the omnidirectional movable body 1. Specifically, the safety control system Sf changes the range of the protection area to a second threshold value of protective stop velocity (for example, 0.3m/s)) lower than a first threshold value of protective stop velocity (for example, 1.1 m/s) before the change. Each threshold value of protective stop velocity before and after the change is not limited to the above values, and can be set to an arbitrary value in consideration of safety standards and risk at the time of collision.

A signal that is transmitted between the respective devices may include a signal for periodically detecting a failure. Further, the device that receives the signal may include a time filter or the like that does not react to the signal for detecting a failure. Further, in FIG. 1A, a signal line between the respective devices indicates one line, but may be duplicated like a signal wiring used in a general safety control system. Further, for information transmission between the respective devices, industrial communication protocols (for example, Ethernet/IP, PROFINET, EtherCAT, Profibus, Modbus, CC-Link, and CANopen) and safety-compatible communication protocols may be used.

The main controller 22 is realized by a hardware processor such as a central processing unit (CPU) executing a program (software). Further, each of the motor control circuit 23 and the velocity monitoring module 32 are each realized by hardware (including a circuit unit; circuitry).

However, each of the motor control circuit 23 and the velocity monitoring module 32 may be realized by a hardware processor such as a CPU executing a program. Further, in the main controller 22, the motor control circuit 23, and the velocity monitoring module 32, some or all of components thereof may be realized by hardware (including a circuit unit; circuitry) such as a large scale integration (LSI), an application specific integrated circuit (ASIC), a field-programmable gate array (FPGA), or a graphics processing unit (GPU) or may be realized by software and hardware in cooperation. The program may be stored in a storage device (a storage device including a non-transitory storage medium) such as a hard disk drive (HDD) or a flash memory in advance or may be stored in a removable storage medium (a non-transitory storage medium) such as a DVD or a CD-ROM and installed by the storage medium being mounted in a drive device. Each functional unit is realized by the processor executing the program stored in the storage unit.

(Specific example of control signal 40)

FIG. 1B is a diagram illustrating a specific example of a control signal 40. In FIG. 1B, the control signal 40 illustrated in FIG. 1A includes a deceleration (alarm) signal 41, an operation mode signal 42, and an protective stop signal 43. The deceleration signal 41 is a signal ("WNG" in FIG. 1C) that is output from the safety laser scanner 31 to the main controller 22 when the object in the warning area is detected by the safety laser scanner 31. When the deceleration signal 41 is input, the main controller 22 controls the motor control circuit 23 such that the velocity of the omnidirectional movable body 1 is reduced.

The operation mode signal 42 is a signal (the operation signal Sg in FIG. 1C) that is output from the main controller 22 to the velocity monitoring module 32, for example, when transition to a docking mode occurs. When the operation mode signal 42 is input, the velocity monitoring module 32 outputs a signal for temporarily reducing the range of the protection area set in the safety laser scanner 31 or invalidating (muting) the range of the protection area.

The protective stop signal 43 is a signal ("OSSD" in FIG. 1C) that is output from the velocity monitoring module 32 to the circuit breaker 33 when the velocity monitoring module 32 determines that a velocity value is abnormal, for example, the velocity of the omnidirectional movable body 1 has reached a threshold value of velocity in design. When the protective stop signal 43 is input, the circuit breaker 33 cuts off the power supplied to the motor control circuit 23. Accordingly, the velocity of the omnidirectional movable body 1 is decelerated (stopped).

(Configuration of mecanum wheels 11a to 11d)

FIG. 2 is a diagram illustrating an example of a configuration of the mecanum wheels 11a to 11d. In FIG. 2, each of the mecanum wheels 11a to 11d includes a plurality of barrel-shaped rollers 201. The plurality of barrel-shaped rollers 201 are attached on an outer circumference of the wheel at an angle with respect to a wheel shaft. The wheel diameters of the mecanum wheels 11a to 11d are the same wheel diameters. However, these wheel diameters may be different wheel diameters.

In FIG. 2, a center line 202 indicates an inclination of the barrel-shaped roller 201. In each of the mecanum wheels 11a to 11d, the plurality of barrel-shaped rollers 201 rotate at the same rotational velocity in the same direction. There are two types in the mecanum wheels 11a to 11d including right-handed wheels with the barrel-shaped rollers 201 tilted upward to the right and left-handed wheels with the barrel-shaped rollers 201 tilted upward to the left. The mecanum wheels 11a to 11d are disposed at four locations at the front, rear, left, and right of a housing 300 (see FIG. 3) of the omnidirectional movable body 1, as in a four-wheeled automobile.

Further, different types (right hand and left hand) of mecanum wheels 11a and 11b (11c and 11d) disposed on the right side (or left side) are disposed at the front and rear. Further, for the mecanum wheels 11a and 11d (11b and 11c) disposed on a diagonal line of the omnidirectional movable body 1, the same type of right-handed (left-handed) mecanum wheels are disposed. Both of the mecanum wheels 11a and 11d and the mecanum wheels 11b and 11c may be for right hand or left hand. The right hand or left hand is a design matter and can be arbitrary.

By disposing the mecanum wheels 11a to 11d as described above, a traveling direction and posture of the movable body are stabilized by the balance of propulsive forces generated by the respective wheels. For example, each wheel is rotated at a predetermined velocity so that the omnidirectional movable body 1 can be moved in one direction. For example, the omnidirectional movable body 1 can move forward, backward, or to a sideway, turn, and move diagonally, for example.

(Coordinate system of omnidirectional movable body 1 and mecanum wheels 11a to 11d)

FIG. 3 is a diagram illustrating an example of a coordinate system of the omnidirectional movable body 1 and the mecanum wheels 11a to 11d. As illustrated in FIG. 3, an x-axis, y-axis, and z-axis are defined by a right-handed coordinate system. The x-axis indicates a front-rear direction. The y-axis indicates a lateral direction. The z-axis indicates a height direction. A velocity in the forward direction of the omnidirectional movable body 1 is a main movement velocity Vx. Vy is a lateral velocity of the omnidirectional movable body 1. $\omega$ is a turning velocity of the omnidirectional movable body 1.

For a rotation direction of each mecanum wheel 11, a counterclockwise direction toward a direction in which the mecanum wheel 11 is attached to the omnidirectional movable body 1 is positive (plus). Further, a rotational velocity of the wheel of the mecanum wheel 11a is $\phi1$, a rotational velocity of the wheel of the mecanum wheel 11b is $\phi2$, a rotational velocity of the wheel of the mecanum wheel 11c is $\phi3$, and a rotational velocity of the wheel of the mecanum wheel 11d is $\phi4$.

Hereinafter, a case in which the omnidirectional movable body 1 moves forward, a case in which the omnidirectional movable body 1 moves to a sideway, and a case in which the omnidirectional movable body 1 turns on the spot will be illustrated.

(Case in which the omnidirectional movable body 1 moves forward)

when $\phi1 = -10$ rad/s, $\phi2 = -10$ rad/s, $\phi3 = 10$ rad/s, and $\phi4 = 10$ rad/s, the omnidirectional movable body 1 moves forward at the main movement velocity Vx of 1 m/s in an x-axis direction.

(Case in which the omnidirectional movable body 1 moves to a sideway)

When $\phi1 = -10$ rad/s, $\phi2 = 10$ rad/s, $\phi3 = -10$ rad/s, and $\phi4 = 10$ rad/s, the omnidirectional movable body 1 moves to a sideway at a velocity Vy of 1 m/s in the y-axis direction.

(Case in which the omnidirectional movable body 1 turns on the spot)

When $\phi 1$ = -5 rad/s, $\phi 2$ = -5 rad/s, $\phi 3$ = -5 rad/s, and $\phi 4$ = -5 rad/s, the omnidirectional movable body 1 turns at an angular velocity of $\omega \approx 1$ rad/s on the spot.

Signs in rotation and translation directions are determined by a defined coordinate system or orientation, and the disposition of left and right types of the mecanum wheels 11. For example, when the defined coordinate system or orientation and the left and right types of the mecanum wheels 11 differ from those illustrated in the figure, signs of the moving direction differ from in the above example.

Here, a relationship between the rotational velocity of each mecanum wheel 11 and the movement velocity of the omnidirectional movable body 1 in the omnidirectional movable body 1 including the four mecanum wheels 11 will be described. The rotational velocity of each mecanum wheel 11 and the movement velocity of the omnidirectional movable body 1 can be expressed using Equation (1). That is, the movement velocity of the omnidirectional movable body 1 can be calculated from the rotational velocity of each mecanum wheel 11.

[Math. 1]

$$\begin{pmatrix} V_x \\ V_y \\ \omega \end{pmatrix} = R_w \cdot A \begin{pmatrix} \Phi_1 \\ \Phi_2 \\ \Phi_3 \\ \Phi_4 \end{pmatrix} \qquad (1)$$

A is a $3 \times 4$ matrix. Rw indicates a wheel radius. Matrix components include a coefficient related to wheel disposition of the mecanum wheel 11. Equation (1) is an equation called forward kinematics.

On the other hand, Equation (2) is an equation called inverse kinematics. Equation (2) is a calculation equation for calculating a necessary wheel rotational velocity from a target velocity of the omnidirectional movable body 1.

[Math. 2]

$$\begin{pmatrix} \Phi_1 \\ \Phi_2 \\ \Phi_3 \\ \Phi_4 \end{pmatrix} = \frac{1}{R_w} \cdot B \begin{pmatrix} V_x \\ V_y \\ \omega \end{pmatrix} \qquad (2)$$

B is a $4 \times 3$ matrix. Rw indicates a wheel radius. Matrix components includes the coefficient related to wheel disposition of the mecanum wheel 11. The main controller 22 calculates the target rotational velocities of the four mecanum wheels 11 using the target velocity of the omnidirectional movable body 1 by using relationships of Equation (1) and Equation (2). The main controller 22 can move the omnidirectional movable body 1 at a desired velocity in a desired direction by outputting the calculated target rotational velocity to the motor control circuit 23.

(Example of monitoring area 400)

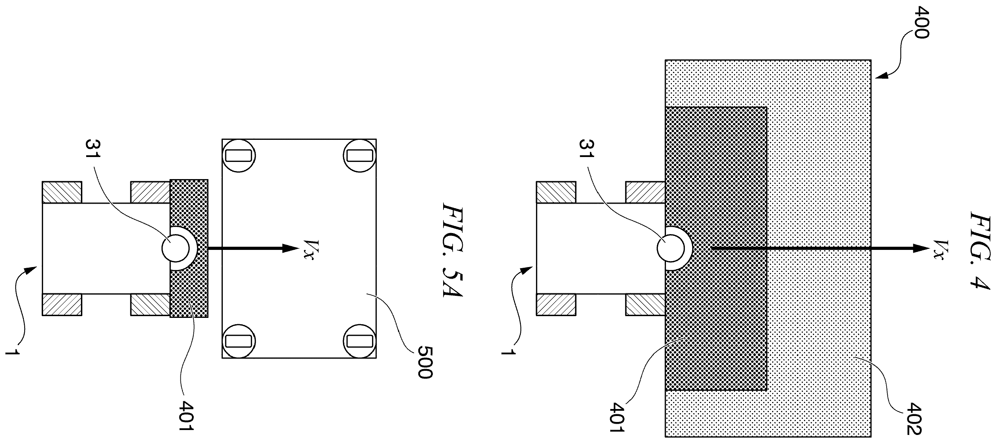

FIG. 4 is a diagram illustrating an example of the monitoring area 400. In FIG. 4, the monitoring area 400 in which an object is detected by the safety laser scanner 31 is set in front of the omnidirectional movable body 1. The monitoring area 400 includes a protection area 401 close to the omnidirectional movable body 1 and a warning area 402 distant from the protection area 401.

The protection area 401 is set in consideration of a distance until the omnidirectional movable body 1 stops, and is, for example, an area within 50 cm in a forward direction from the omnidirectional movable body 1. When the safety laser scanner 31 detects that an obstacle is present in the protection area 401, the circuit breaker 33 (see FIG. 1A) cuts off the power supplied to the motor control circuit 23 so that the omnidirectional movable body 1 stops.

The warning area 402 is, for example, an area within 50 cm to several m in the forward direction of the omnidirectional movable body 1. When the safety laser scanner 31 detects that an obstacle is present in the warning area 402, the main controller 22 controls the motor control circuit 23 to decelerate the omnidirectional movable body 1. The monitoring area 400 (the protection area 401 and the warning area 402) is an area of which a range can be changed according to situations.

(Change in range of monitoring area 400)

FIG. 5A is a diagram illustrating an example of the changed monitoring area 400. As illustrated in FIG. 5A, a transport target object 500 (basket cart) is present in front of the omnidirectional movable body 1. That is, a situation in which the omnidirectional movable body 1 approaches the transport target object 500 in order to transport the transport target object 500 on the basis of the movement plan is illustrated. Here, when the safety laser scanner 31 detects the transport target object 500 as an obstacle, the omnidirectional movable body 1 stops so that the omnidirectional movable body 1 cannot transport the transport target object 500.

Therefore, when the omnidirectional movable body 1 moves near the transport target object 500, the range of the protection area 401 is temporarily reduced (or invalidated) so that the transport target object 500 is not detected as an obstacle. Further, the warning area 402 is temporarily invalidated, for example. This makes it possible for the omnidirectional movable body 1 to pick up the transport target object 500 (crawl under the transport target object 500).

(Example of threshold value of protective stop velocity)

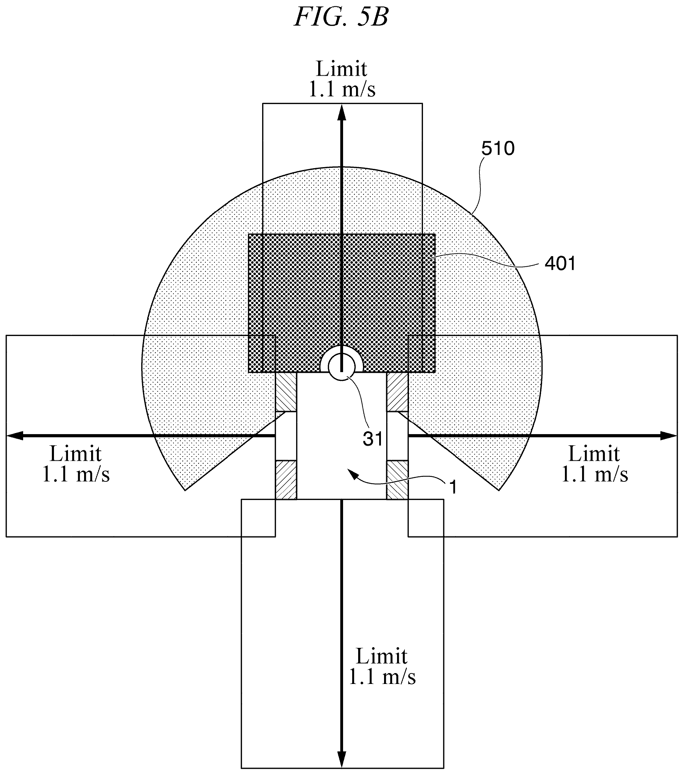

FIG. 5B is a diagram illustrating an example of the threshold value of protective stop velocity. As illustrated in FIG. 5B, there is a detection area 510 that can be detected by the safety laser scanner 31 in front of the omnidirectional movable body 1. The detection area 510 has a radius of about 10 m around the omnidirectional movable body 1 and is formed at 270 ° in front of the omnidirectional movable body 1. The protection area 401 is included in the detection area 510. In normal traveling, the threshold value of protective stop velocity is set to, for example, 1.1 m/s in all directions. That is, it is shown that in normal traveling, when the movement velocity of the omnidirectional movable body 1 reaches 1.1 m/s, an protective stop is made. In FIG. 5B, the threshold values of the velocities in a front-rear direction (Vx direction) and a left-right direction (Vy direction) are shown, but the same applies to a velocity in a diagonal direction and a turning velocity (a velocity including Vx, Vy, and $\omega$ components).

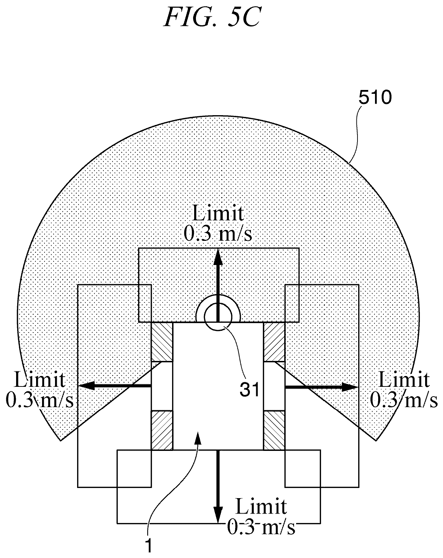

FIG. 5C is a diagram illustrating an example of a threshold value of protective stop velocity at the time of muting. As illustrated in FIG. 5C, the protection area 401 disappears in front of the omnidirectional movable body 1, that is, the protection area 401 is invalidated. At the time of muting, the threshold value of protective stop velocity is set to, for example, 0.3 m/s in all directions. That is, it is shown that when the movement velocity of the omnidirectional movable body 1 reaches 0.3 m/s in traveling at the time of muting, an protective stop is made. In FIG. 5C, the threshold values of velocity in the front-rear direction (Vx direction) and the left-right direction (Vy direction) are shown, but the same applies to the velocity in the diagonal direction and the turning velocity (the velocity including the Vx, Vy, and $\omega$ components).

(Relationship between velocity of the omnidirectional movable body 1 and rotational velocity of the mecanum wheel 11)

The rotational velocity of the mecanum wheel 11 and the velocity of the omnidirectional movable body 1 can be related by and calculated using Equations (1), (2), and (3). For a velocity used for a velocity determination, it is also possible to determine the velocity using a condition determination using the number of rotations of each wheel and a logical operation result in order to simplify a calculation process. Next, this way of thinking will be described.

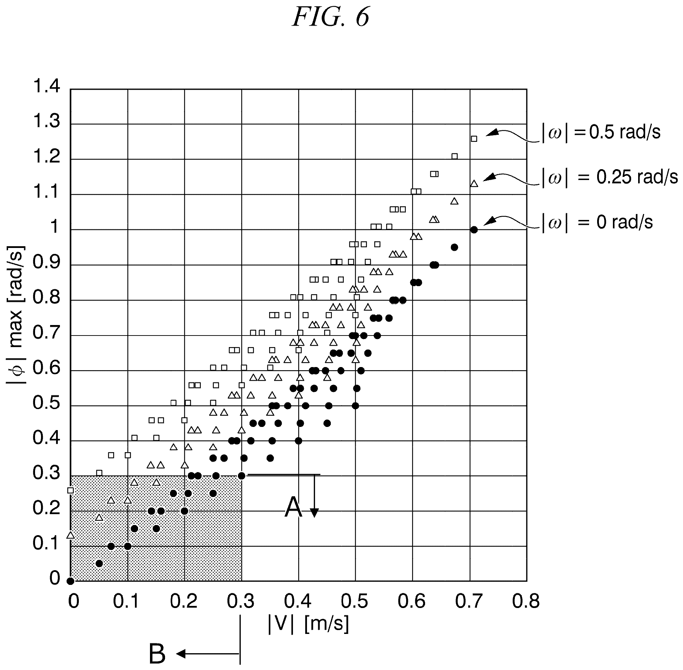

FIG. 6 is a diagram illustrating an example of a relationship between the velocity of the omnidirectional movable body 1 and the rotational velocity (angular velocity) of the mecanum wheel 11. In FIG. 6, a horizontal axis indicates an absolute value |V| of the velocity of the omnidirectional movable body 1. That is, |V| can be expressed using Equation (3). [Math. 3]

$$|V| = \sqrt{Vx^2 + Vy^2} \qquad (3)$$

A vertical axis indicates an absolute value $|\phi|$ of a maximum value among the rotational velocities of the four mecanum wheels 11. Further, $|\omega|$ illustrated in FIG. 6 indicates an absolute value of the rotational velocity (angular velocity) of the turning of the omnidirectional movable body 1. $|\omega|$ indicates any one of 0 rad/s, 0.25 rad/s, and 0.5 rad/s.

A relationship in which, for example, when a rotational velocity $|\phi|$ (vertical axis) is 0.3 rad/s or lower (A in FIG. 6), the velocity |V| (horizontal axis) is 0.3 m/s or lower (B in FIG. 6) as illustrated in FIG. 6 is satisfied. Further, even when $|\omega|$ increases, this relationship is satisfied.

Therefore, a determination is made that the absolute value $|\phi|$ of the maximum value among the rotational velocities of the four mecanum wheels 11 is 0.3 rad/s or lower, so that the velocity |V| of the omnidirectional movable body 1 can be regarded as being 0.3 m/s or lower (as traveling at low velocity). A case in which the rotational velocities of the four mecanum wheels 11 are detected, and when all of the rotational velocities are equal to or lower than a threshold value (for example, 0.3 rad/s), the omnidirectional movable body 1 is regarded as traveling at a low velocity and the range of the protection area 401 is reduced will be described in the first embodiment.

(Velocity determination logic)

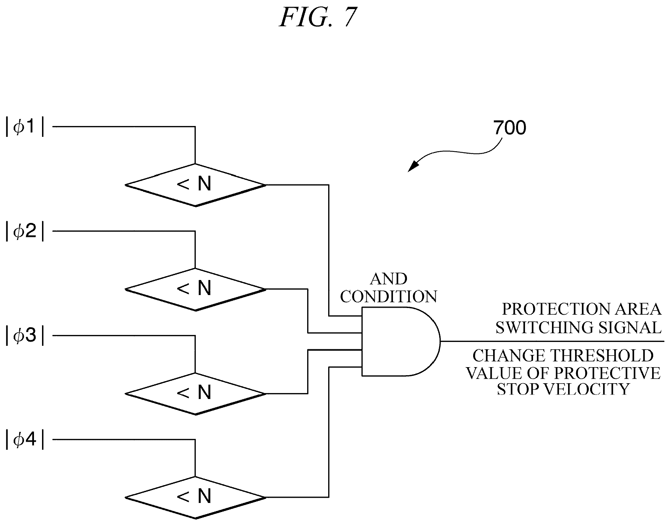

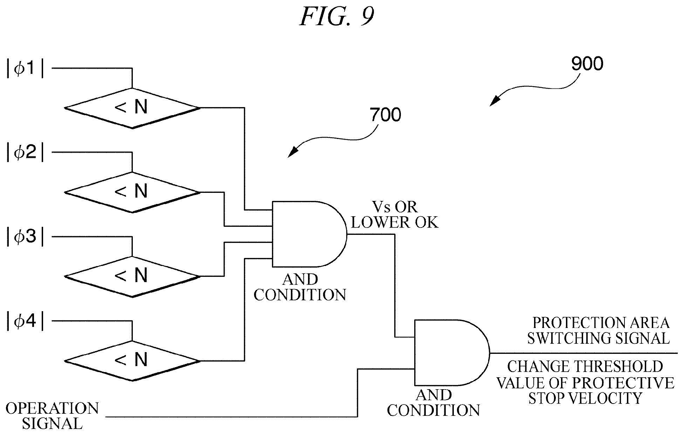

FIG. 7 is a diagram illustrating a velocity determination logic according to the first embodiment. A logic 700 illustrated in FIG. 7 is a logic that determines whether or not the rotational velocity of each of the mecanum wheel 11 is equal to or lower than a threshold value and outputs a logical product of determination results. Specifically, the logic 700 indicates a logic in which the velocity monitoring module 32 outputs a switching signal for the protection area 401 when all of the rotational velocities $\phi 1$ to $\phi 4$ are lower than the threshold value N, that is, when an AND condition is satisfied. Further, when the AND condition is satisfied, the velocity monitoring module 32 changes the threshold value of protective stop velocity.
On the other hand, when any one of the rotational velocities $\phi 1$ to $\phi 4$ of the mecanum wheels 11a to 11d detected by the rotational velocity detectors 13a to 13d is equal to or higher than the threshold value N, the switching signal for the protection area 401 is not output. Accordingly, when all of the rotational velocities $\phi 1$ to $\phi 4$ are lower than the threshold value N, that is, when the omnidirectional movable body 1 travels at a low velocity (the low velocity value Vs or lower), the safety laser scanner 31 can reduce the range of protection area 401. Further, when all of the rotational velocities $\phi 1$ to $\phi 4$ are lower than the threshold value N, the velocity monitoring module 32 can change the threshold value of protective stop velocity from the first threshold value of protective stop velocity (1.1 m/s) to the second threshold value of protective stop velocity (0.3 m/s).
In the present embodiment, the wheel diameters of the mecanum wheels 11a to 11d are the same, but the wheel diameters are not limited thereto and may differ. When the wheel diameters of the mecanum wheels 11a to 11d differ, the rotational velocity of each wheel may be multiplied by a conversion coefficient in determining the rotational velocity in the logic 700. Further, different threshold values may be set in determining the rotational velocity in the logic 700.
Further, the threshold value N is set to one step, but the present invention is not limited thereto and the threshold value N can be set to a plurality of steps. For example, when the range of the warning area 402 is reduced, a threshold value greater than the threshold value N is set and the logical product using the threshold value is output so that the range of the warning area 402 can be reduced. In this case, a calculation logic for the logical product is a multi-step logic, and a signal output is also a multi-step output.
Further, in FIGS. 7 and 9, the rotational velocities of the four mecanum wheels 11 are detected, and when all of the rotational velocities are equal to or lower than the threshold value (for example, 0.3 rad/s), the omnidirectional movable body 1 is discriminated to travel at a low velocity, but the present invention is not limited thereto. For example, the movement velocity may be calculated using the detection result of the rotational velocity of each mecanum wheel 11 and Equation (1), and a discrimination can be made from a result of the calculation that the omnidirectional movable body is traveling at a low velocity.

(Step of switching of protection area 401 and threshold value of protective stop velocity)

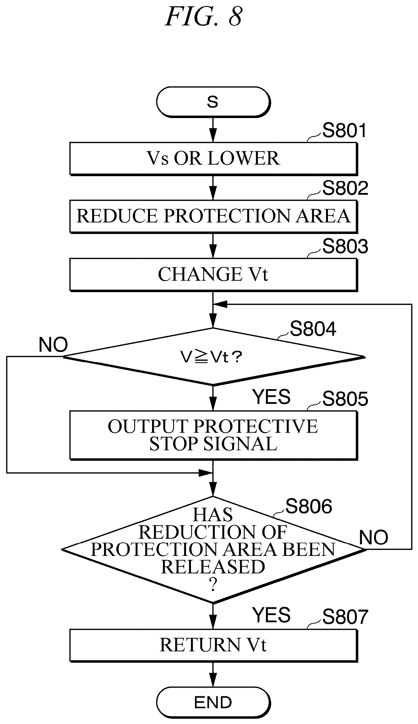

FIG. 8 is a flowchart illustrating a step of switching of the protection area 401 and the threshold value of protective stop velocity, which is performed by the omnidirectional movable body 1 according to the first embodiment. In step S801 of FIG. 8, the velocity monitoring module 32 waits until the velocity of the omnidirectional movable body 1 becomes equal to or lower than the low velocity value Vs (for example, 0.3 m/s). Specifically, the velocity monitoring module 32 waits until the velocity calculated using Equation (1) becomes equal to or lower than the threshold value of the velocity, or waits until all of the rotational velocities $\phi 1$ to $\phi 4$ of the mecanum wheels 11a to 11d detected by the rotational velocity detectors 13a to 13d become lower than the threshold value N (for example, 0.3 rad/s).
When the velocity of the omnidirectional movable body 1 becomes the low velocity value Vs or lower, the velocity monitoring module 32 outputs the switching signal for switching the range of the protection area 401 to the safety laser scanner 31. Accordingly, the safety laser scanner 31 reduces (or invalidates) the protection area 401 (step S802).
The velocity monitoring module 32 changes the threshold value of protective stop velocity Vt from the first threshold value of protective stop velocity (1.1 m/s) to the second threshold value of protective stop velocity (0.3 m/s) (step S803). However, changing the threshold value of protective stop velocity Vt to the second protective stop velocity is not limited to the velocity of the omnidirectional movable body 1 being equal to or lower than the low velocity value Vs, and may be performed when a muting signal is output from the main controller 22. Further, the velocity monitoring module 32 determines whether or not the current movement velocity V of the omnidirectional movable body 1 is equal to or higher than the second threshold value of protective stop velocity (0.3 m/s) (step S804). The movement velocity V of the omnidirectional movable body 1 can be calculated by using, for example, the result of detecting the rotational velocity of each mecanum wheel 11 and Equation (1).
When the current movement velocity V of the omnidirectional movable body 1 is lower than the second threshold value of protective stop velocity (0.3 m/s) (step S804: NO), the velocity monitoring module 32 proceeds to step S806. When the current movement velocity V of the omnidirectional movable body 1 is equal to or higher than the second threshold value of protective stop velocity (0.3 m/s) (step S804: YES), the velocity monitoring module 32 outputs the protective stop signal 43 to the circuit breaker 33 (step S805). Accordingly, the omnidirectional movable body 1 makes an protective stop.

The velocity monitoring module 32 determines whether or not the reduction of the protection area 401 has been released (step S806). The reduction of the protection area 401 is released according to the movement plan. When the reduction of the protection area 401 is not released (step S806: NO), the velocity monitoring module 32 returns to step S804. When the reduction of the protection area 401 is released (step S806: YES), the threshold value of protective stop velocity Vt is returned to the first threshold value of protective stop velocity (1.1 m/s) (step S807), and a series of steps end. When the condition for changing the threshold value of protective stop velocity Vt to the second protective stop velocity is the output of the muting signal, a determination may be made as to whether or not the output of the muting signal from the main controller 22 has stopped in step S806. When the output of the signal is stopped, the velocity monitoring module 32 may return the threshold value of protective stop velocity Vt to the first threshold value of protective stop velocity (1.1 m/s).

According to the omnidirectional movable body 1 of the first embodiment described above, when the omnidirectional movable body 1 travels at a low velocity (the low velocity value Vs or lower), it is possible to reduce the range of the protection area 401 of the safety laser scanner 31. This makes it possible to curb the safety laser scanner 31 detecting the transport target object 500 as an obstacle when the omnidirectional movable body 1 approaches the transport target object 500 and travels at a low velocity. Therefore, the omnidirectional movable body 1 can pick up the transport target object 500 (crawl under the transport target object 500) and can transport the transport target object 500.

In particular, in the omnidirectional movable body 1 according to the first embodiment, since the range of the protection area 401 can be reduced by using the rotational velocity of the mecanum wheel 11 without providing a plurality of sensors for detecting obstacles, it is possible to control the safety control system Sf with a simple configuration. Therefore, it is possible to safely operate the omnidirectional movable body 1 with a simple configuration.

Further, according to the omnidirectional movable body 1 of the first embodiment, when the protection area 401 is reduced, it is possible to curb the omnidirectional movable body 1 operating at a movement velocity equal to or higher than the second threshold value of protective stop velocity. That is, it is possible to curb the omnidirectional movable body 1 operating at a movement velocity equal to or higher than the second threshold value of protective stop velocity when the omnidirectional movable body 1 approaches the transport target object 500 and travels at a low velocity. Therefore, it is possible to curb the omnidirectional movable body 1 coming into contact with the transport target object 500 or the like, and to safely operate the omnidirectional movable body 1.

Further, when the protection area 401 is not reduced (when the omnidirectional movable body 1 does not travel at a low velocity), the threshold value of protective stop velocity is not decreased, making it difficult for the omnidirectional movable body 1 to make an protective stop. Therefore, it is possible to curb a decrease in movement efficiency of the omnidirectional movable body 1.

(Modification example 1 of first embodiment)

A case in which the range of the protection area 401 and the threshold value of protective stop velocity are changed according to the result of outputting the logical product of the rotational velocities of the respective wheels being equal to or lower than the threshold value as illustrated in FIG. 7 has been described in the first embodiment described above. A case in which the range of the protection area 401 and the threshold value of protective stop velocity are changed according to the logical product of "the logical product of the rotational velocities of the respective wheels being equal to or lower than the threshold value" and "the operation signal output from the main controller 22" will be described in modification example 1 of the first embodiment. In each of the following modification examples and other embodiments, the same content as that described in the first embodiment is denoted by the same reference signs and description thereof will be omitted appropriately.

(Logic for switching of the protection area 401 and the threshold value of protective stop velocity)

FIG. 9 is a diagram illustrating a logic for switching of the protection area 401 and the threshold value of protective stop velocity according to modification example 1 of the first embodiment. The logic 900 illustrated in FIG. 9 is a logic that outputs a logical product of the output result of the logic 700 and the operation signal from the main controller 22. The operation signal from the main controller 22 is a signal that is output from the main controller 22 according to a target movement plan, for example, when the omnidirectional movable body 1 docks (an operation at the time of pick-up) with the transport target object 500 (basket cart). When the AND condition is satisfied between an input of the operation signal and a velocity determination result illustrated in the logic 700, the velocity monitoring module 32 outputs a signal for reducing the protection area 401. When the AND condition is satisfied, the velocity monitoring module 32 changes the threshold value of protective stop velocity from the first threshold value of protective stop velocity (1.1 m/s) to the second threshold value of protective stop velocity (0.3 m/s).

(Step of switching of protection area 401 and threshold value of protective stop velocity)

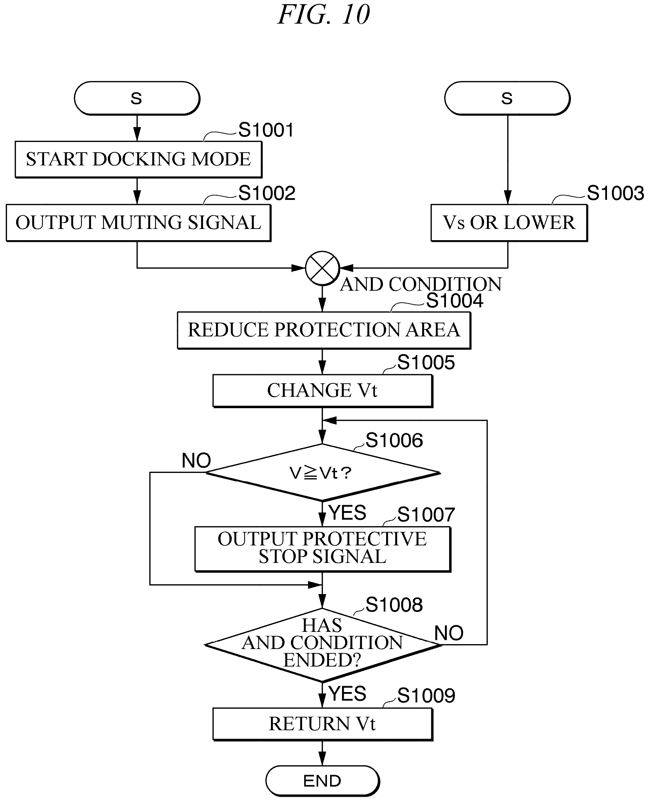

FIG. 10 is a sequence diagram illustrating a step of switching of the protection area 401 and the threshold value of protective stop velocity, which is performed by the omnidirectional movable body 1 according to modification example 1 of the first embodiment. In step S1001 of FIG. 10, the main controller 22 refers to the movement plan and waits until the docking mode, which indicates the start of transport of the transport target object 500 of the omnidirectional movable body 1, is started. When the docking mode is started, the main controller 22 outputs an operation signal (for example, a muting signal) to the velocity monitoring module 32 (step S1002).

On the other hand, in step S1003, the velocity monitoring module 32 waits until the velocity of the omnidirectional movable body 1 becomes the low velocity value Vs or lower. Specifically, the velocity monitoring module 32 waits until all of the rotational velocities $\phi1$ to $\phi4$ of the mecanum wheels 11a to 11d detected by the rotational velocity detectors 13a to 13d become lower than the threshold value N. The velocity of the omnidirectional movable body 1 may be calculated by using the detection result of the rotational velocity of each mecanum wheel 11 and Equation (1).

When the velocity of the omnidirectional movable body 1 becomes the low velocity value Vs or lower and the operation signal is input from the main controller 22, that is, when the AND condition is satisfied, the velocity monitoring module 32 outputs the switching signal for switching the range of the protection area 401 to the safety laser scanner 31. Accordingly, the safety laser scanner 31 reduces (or invalidates) the protection area 401 (step S1004).

The velocity monitoring module 32 changes the threshold value of protective stop velocity Vt from the first threshold value of protective stop velocity (1.1 m/s) to the second threshold value of protective stop velocity (0.3 m/s) (step S1005). However, a condition for changing the threshold value of protective stop velocity Vt to the second protective stop velocity is not limited to the satisfaction of the AND condition and may be that the muting signal is output from the main controller 22. Further, the velocity monitoring module 32 determines whether or not the current movement velocity V of the omnidirectional movable body 1 is equal to or higher than the second threshold value of protective stop velocity (0.3 m/s) (step S1006).

The movement velocity V of the omnidirectional movable body 1 can be calculated by using, for example, the result of detecting the rotational velocity of each mecanum wheel 11 and Equation (1).

When the current movement velocity V of the omnidirectional movable body 1 is lower than the second threshold value of protective stop velocity (0.3 m/s) (step S1006: NO), the velocity monitoring module 32 proceeds to step S1008. When the current movement velocity V of the omnidirectional movable body 1 is equal to or higher than the second threshold value of protective stop velocity (0.3 m/s) (step S1006: YES), the velocity monitoring module 32 outputs the protective stop signal 43 to the circuit breaker 33 (step S1007). Accordingly, the omnidirectional movable body 1 makes an protective stop.

The velocity monitoring module 32 determines whether or not the satisfaction of the AND condition has ended (step S1008). When the satisfaction of the AND condition has not ended (step S1008: NO), the velocity monitoring module 32 returns to step S1006. When the satisfaction of the AND condition has ended (step S1008: YES), the reduction of the protection area 401 is released, the threshold value of protective stop velocity Vt is returned to the first threshold value of protective stop velocity (1.1 m/s) (step S1009), and the series of steps end. When the condition for changing the threshold value of protective stop velocity Vt to the second protective stop velocity is the output of the muting signal, a determination may be made as to whether or not the output of the muting signal from the main controller 22 has stopped in step S1008. When the output of the signal is stopped, the velocity monitoring module 32 may return the threshold value of protective stop velocity Vt to the first threshold value of protective stop velocity (1.1 m/s).

According to modification example 1 of the first embodiment, when the docking mode is started and the omnidirectional movable body 1 travels at a low velocity (the low velocity value Vs or lower) near a position in which the transport target object 500 is disposed, it is possible to prevent the safety laser scanner 31 from detecting the transport target object 500 as an obstacle. That is, even when the omnidirectional movable body 1 travels at a low velocity, the protection area 401 can be prevented from being reduced except near the transport target object 500. Therefore, the range of the protection area 401 is reduced at an inappropriate position other than near the transport target object 500, making it possible to curb degradation of the safety. Further, since the range of the protection area 401 can be reduced at a more appropriate timing, it is possible to improve the efficiency of the transport that is performed by the omnidirectional movable body 1.

Further, according to modification example 1 of the first embodiment, when the docking mode is started and the omnidirectional movable body 1 travels at a low velocity (the low velocity value Vs or lower) near the transport target object 500, it is possible to decrease a threshold value of protective stop velocity Vt. That is, even when the omnidirectional movable body 1 travels at a low velocity, it is possible to prevent the threshold value of protective stop velocity Vt from being decreased except near the transport target object 500. Therefore, it is possible to make it difficult for the omnidirectional movable body 1 to make an protective stop except near the transport target object 500. Therefore, it is possible to curb a degradation in the movement efficiency of the omnidirectional movable body 1.

(Modification example 2 of first embodiment)

In the first embodiment described above, a case in which the range of the protection area 401 and the threshold value of protective stop velocity are changed according to the result of outputting the logical product in which a result of determining the rotational velocity of each wheel has been used, as illustrated in FIG. 7 has been described. A case in which the range of the protection area 401 and the threshold value of protective stop velocity are changed according to a logical sum of "the logical product of the rotational velocities of the respective wheels being equal to or lower than the threshold value" and "a calculation value calculated using rotational velocity of each mecanum wheel 11" will be described in modification example 2 of the first embodiment.

The calculation value referred to here is the main movement velocity Vx of the omnidirectional movable body 1 in the x direction (also referred to as a "main traveling direction"). A case in which the range of the protection area 401 is reduced when the main movement velocity Vx becomes negative, that is, when the omnidirectional movable body 1 retreats with respect to the main traveling direction will be described in modification example 2. Whether or not the omnidirectional movable body 1 retreats with respect to the main traveling direction can be determined using Equation (4).

[Math. 4]

$$-(\phi 1 + \phi 2) + (\phi 3 + \phi 4) < 0 \qquad (4)$$

The left side of Equation (4) indicates the main movement velocity Vx. When Equation (4) is satisfied, a determination can be made that the omnidirectional movable body 1 retreats.

(Logic for switching of protection area 401 and threshold value of protective stop velocity)

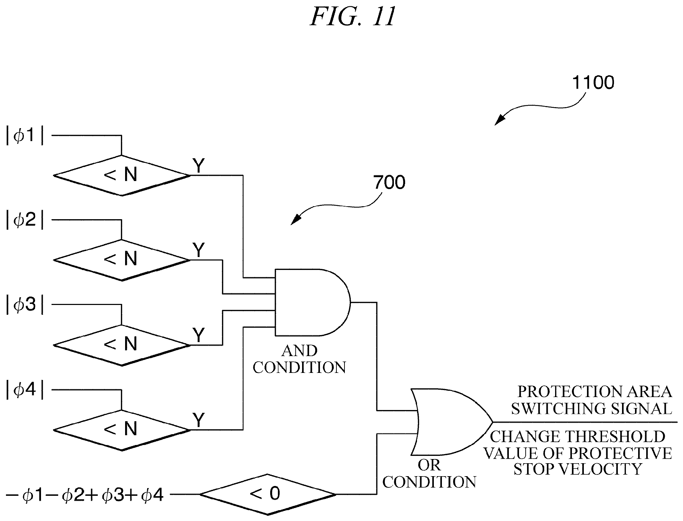

FIG. 11 is a diagram illustrating a logic for switching of the protection area 401 and the threshold value of protective stop velocity according to modification example 2 of the first embodiment. The logic 1100 illustrated in FIG. 11 is a logic that outputs a logical sum (a result of the OR condition) of the output result of the logic 700 and a result of the determination that the omnidirectional movable body 1 retreats. Using this logic 1100, the velocity monitoring module 32 outputs a signal for reducing the protection area 401 when the OR condition thereof is satisfied. When the OR condition is satisfied, the velocity monitoring module 32 changes the threshold value of protective stop velocity from the first threshold value of protective stop velocity (1.1 m/s) to the second threshold value of protective stop velocity (0.3 m/s).

(Step of switching of protection area 401 and threshold value of protective stop velocity)

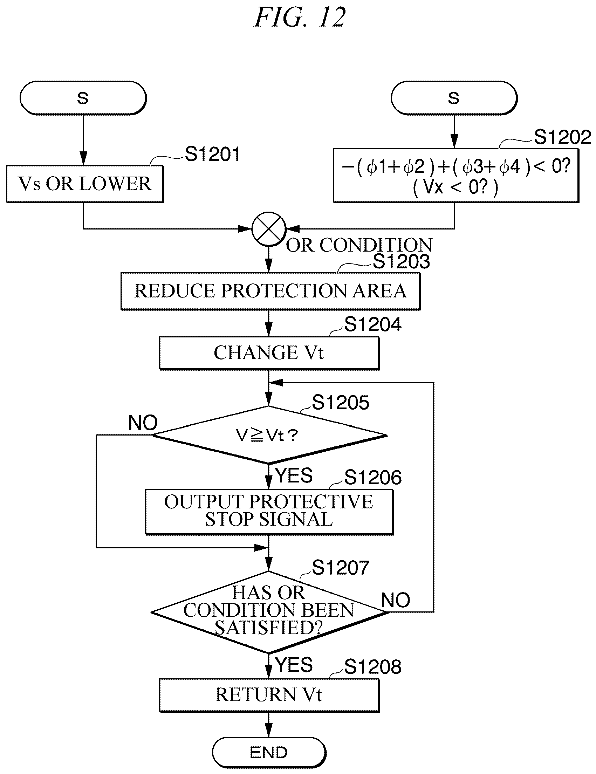

FIG. 12 is a sequence diagram illustrating a step of switching of the protection area 401 and the threshold value of protective stop velocity, which is performed by the omnidirectional movable body 1 according to modification example 2 of the first embodiment. In step S1201 of FIG. 12, the velocity monitoring module 32 waits until the velocity of the omnidirectional movable body 1 becomes the low velocity value Vs or lower. Specifically, the velocity monitoring module 32 waits until all of the rotational velocities $\phi 1$ to $\phi 4$ of the mecanum wheels 11a to 11d detected by the rotational velocity detectors 13a to 13d become lower than the threshold value N. The velocity of the omnidirectional movable body 1 may be calculated by using the detection result of the rotational velocity of each mecanum wheel 11 and Equation (1).

Further, in step S1202, the velocity monitoring module 32 waits until the main movement velocity Vx, which indicates that the omnidirectional movable body 1 retreats, becomes lower than 0 (until -($\phi 1 + \phi 2$) + ($\phi 3 + \phi 4$) < 0 is satisfied). When the velocity of the omnidirectional movable body 1 becomes the low velocity value Vs or lower or the main movement velocity Vx becomes lower than 0, that is, when the OR condition is satisfied, the velocity monitoring module 32 outputs the switching signal for switching the range of the protection area 401 to the safety laser scanner 31. Accordingly, the safety laser scanner 31 reduces (or invalidates) the protection area 401 (step S1203).

The velocity monitoring module 32 changes the threshold value of protective stop velocity Vt from the first threshold value of protective stop velocity (1.1 m/s) to the second threshold value of protective stop velocity (0.3 m/s) (step S1204). However, the condition for changing the threshold value of protective stop velocity Vt to the second protective stop velocity is not limited to the satisfaction of the OR condition, and may be that the muting signal may be output from the main controller 22. Further, the velocity monitoring module 32 determines whether or not the current movement velocity V of the omnidirectional movable body 1 is equal to or higher than the second threshold value of protective stop velocity (0.3 m/s) (step S1205). The movement velocity V of the omnidirectional movable body 1 can be calculated by using, for example, the result of detecting the rotational velocity of each mecanum wheel 11 and Equation (1).

When the current movement velocity V of the omnidirectional movable body 1 is lower than the second threshold value of protective stop velocity (0.3 m/s) (step S1205: NO), the velocity monitoring module 32 proceeds to step S1207. When the current movement velocity V of the omnidirectional movable body 1 is equal to or higher than the second threshold value of protective stop velocity (0.3 m/s) (step S1205: YES), the velocity monitoring module 32 outputs the protective stop signal 43 to the circuit breaker 33 (step S1206). Accordingly, the omnidirectional movable body 1 makes an protective stop.

The velocity monitoring module 32 determines whether or not the OR condition has been satisfied (step S1207). When the satisfaction of the OR condition does not end (step S1207: NO), the velocity monitoring module 32 returns to step S1205. When the satisfaction of the OR condition ends (step S1207: YES), the reduction of the protection area 401 is released, the threshold value of protective stop velocity Vt is returned to the first threshold value of protective stop velocity (1.1 m/s) (step S1208), and the series of steps end. When the condition for changing the threshold value of protective stop velocity Vt to the second protective stop velocity is the output of the muting signal, a determination may be made as to whether or not the output of the muting signal from the main controller 22 has stopped in step S1207. When the output of the signal is stopped, the velocity monitoring module 32 may return the threshold value of protective stop velocity Vt to the first threshold value of protective stop velocity (1.1 m/s).

According to modification example 2 of the first embodiment, it is possible to reduce the range of the protection area 401 not only when the movement velocity of the omnidirectional movable body 1 decreases (the low velocity value Vs or lower), but also when the omnidirectional movable body 1 retreats. For example, in a case in which the omnidirectional movable body 1 retreats near the transport target object 500 such as a case in which the omnidirectional movable body 1 is oriented in a direction (facing direction) with respect to the transport target object 500, it is possible to appropriately reduce the range of the protection area 401 and prevent the transport target object 500 from being detected as an obstacle. Therefore, it is possible to improve the efficiency of the transport that is performed by the omnidirectional movable body 1.

Further, according to modification example 2 of the first embodiment, it is possible to decrease the threshold value of protective stop velocity Vt not only in a case in which the movement velocity of the omnidirectional movable body 1 decreases (the low velocity value Vs or lower), but also in a case in which the omnidirectional movable body 1 retreats. For example, in a case in which the omnidirectional movable body 1 retreats near the transport target object 500 such as a case in which the omnidirectional movable body 1 is oriented in a direction (facing direction) with respect to the transport target object 500, it is possible to curb a backward movement velocity of the omnidirectional movable body 1 becoming a movement velocity equal to or higher than the second threshold value of protective stop velocity, and thus, to safely operate the omnidirectional movable body 1.

In the present modification example 2, when the omnidirectional movable body 1 retreats, the velocity monitoring module 32 may changes only the threshold value of protective stop velocity in the backward direction to the second threshold value of protective stop velocity (0.3 m/s). Specifically, the velocity monitoring module 32 discriminates whether or not the omnidirectional movable body 1 retreats, and when the velocity monitoring module 32 discriminates that the omnidirectional movable body 1 retreats, the threshold value of protective stop velocity may be changed only in the backward direction. Accordingly, it is possible to curb the omnidirectional movable body 1 operating at a movement velocity equal to or higher than the second threshold value of protective stop velocity only in the backward direction. Further, since the threshold value of protective stop velocity is not decreased except for backward, it is possible to make it difficult for the omnidirectional movable body 1 to make an protective stop except for backward side. Therefore, it is possible to further curb the degradation in the movement efficiency of the omnidirectional movable body 1.

(Modification example 3 of first embodiment)

A case in which the range of the protection area 401 and the threshold value of protective stop velocity are changed according to the logical product of "the logical product of the rotational velocities of the respective wheels being equal to or lower than the threshold value" and "the operation signal output from the main controller 22" has been described in modification example 1 of the first embodiment described above. A case in which the range of the protection area 401 and the threshold value of protective stop velocity are changed according to a logical sum of "a logical product of the logical product of the rotational velocities of the respective wheels being equal to or lower than the threshold value and the operation signal from the main controller 22" described in modification example 1 and "the calculation value calculated using rotational velocity of each mecanum wheel 11" described in modification example 2 will be described in modification example 3 of the first embodiment.

(Step of switching of protection area 401 and threshold value of protective stop velocity)

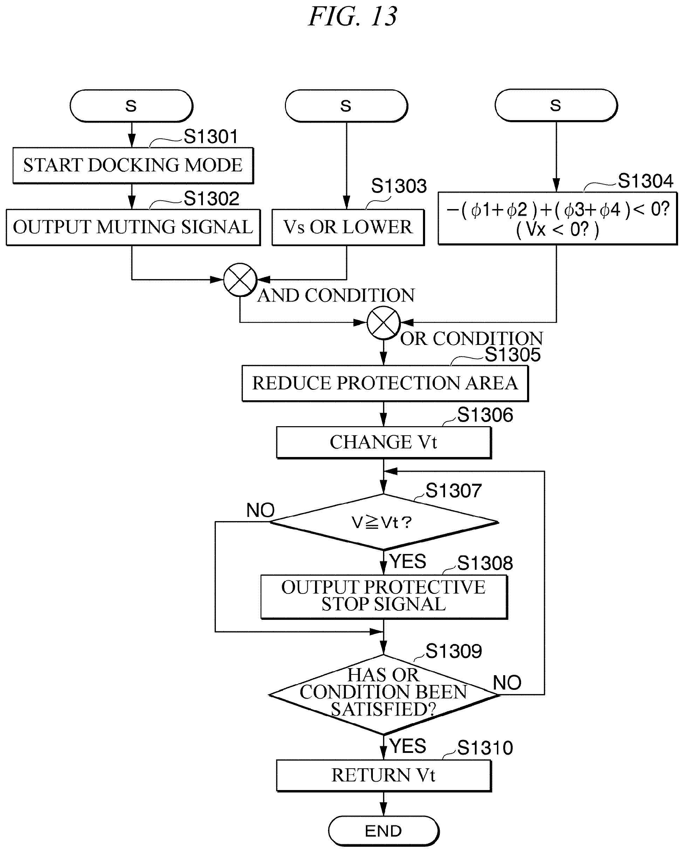

FIG. 13 is a sequence diagram illustrating a step of switching of the protection area 401 and the threshold value of protective stop velocity, which is performed by the omnidirectional movable body 1 according to modification example 3 of the first embodiment. In step S1301 of FIG. 13, the main controller 22 refers to the movement plan and waits until the docking mode, which indicates the start of transport of the transport target object 500 of the omnidirectional movable body 1, is started. When the docking mode is started, the main controller 22 outputs the operation signal (for example, the muting signal) to the velocity monitoring module 32 (step S1302).

On the other hand, in step S1303, the velocity monitoring module 32 waits until the velocity of the omnidirectional movable body 1 becomes the low velocity value Vs or lower. Specifically, the velocity monitoring module 32 waits until all of the rotational velocities $\phi1$ to $\phi4$ of the mecanum wheels 11a to 11d detected by the rotational velocity detectors 13a to 13d become lower than the threshold value N. The velocity of the omnidirectional movable body 1 may be calculated by using the detection result of the rotational velocity of each mecanum wheel 11 and Equation (1).

Further, in step S1304, the velocity monitoring module 32 waits until the main movement velocity Vx, which indicates that the omnidirectional movable body 1 retreats, becomes lower than 0 (until $-(\phi1 + \phi2) + (\phi3 + \phi4) < 0$ is satisfied).

When (1) the AND condition that "the velocity of the omnidirectional movable body 1 is equal to or lower than the low velocity value Vs and there is an input of the operation signal from the main controller 22" is satisfied or (2) when the main movement velocity Vx becomes lower than 0, that is, it is assumed that the OR condition of (1) and (2) is satisfied. In this case, the velocity monitoring module 32 outputs the switching signal for switching the range of the protection area 401 to the safety laser scanner 31. Accordingly, the safety laser scanner 31 reduces (or invalidates) the protection area 401 (step S1305).

The velocity monitoring module 32 changes the threshold value of protective stop velocity Vt from the first threshold value of protective stop velocity (1.1 m/s) to the second threshold value of protective stop velocity (0.3 m/s) (step S1306). However, the condition for changing the threshold value of protective stop velocity Vt to the second protective stop velocity is not limited to the satisfaction of the OR condition, and may be that the muting signal may be output from the main controller 22. Further, the velocity monitoring module 32 determines whether or not the current movement velocity V of the omnidirectional movable body 1 is equal to or higher than the second threshold value of protective stop velocity (0.3 m/s) (step S1307). The movement velocity V of the omnidirectional movable body 1 can be calculated by using, for example, the result of detecting the rotational velocity of each mecanum wheel 11 and Equation (1).

When the current movement velocity V of the omnidirectional movable body 1 is lower than the second threshold value of protective stop velocity (0.3 m/s) (step S1307: NO), the velocity monitoring module 32 proceeds to step S1309. When the current movement velocity V of the omnidirectional movable body 1 is equal to or higher than the second threshold value of protective stop velocity (0.3 m/s) (step S1307: YES), the velocity monitoring module 32 outputs the protective stop signal 43 to the circuit breaker 33 (step S1308). Accordingly, the omnidirectional movable body 1 makes an protective stop.

The velocity monitoring module 32 determines whether or not the satisfaction of the OR conditions (1) and (2) has ended (step S1309). When the satisfaction of the OR conditions (1) and (2) has not ended (step S1309: NO), the velocity monitoring module 32 returns to step S1307. When the satisfaction of the OR conditions (1) and (2) has ended (step S1309: YES), the reduction of the protection area 401 is released, the threshold value of protective stop velocity Vt is returned to the first threshold value of protective stop velocity (1.1 m/s) (step S1310), and a series of steps end. In the present modification example 3, when the omnidirectional movable body 1 retreats, the velocity monitoring module 32 may change only the threshold value of protective stop velocity in the backward direction to the second threshold value of protective stop velocity (0.3 m/s). When the condition for changing the threshold value of protective stop velocity Vt to the second protective stop velocity is the output of the muting signal, a determination may be made as to whether or not the output of the muting signal from the main controller 22 has stopped in step S1309. When the output of the signal is stopped, the velocity monitoring module 32 may return the threshold value of protective stop velocity Vt to the first threshold value of protective stop velocity (1.1 m/s).

According to modification example 3 of the first embodiment, it is possible to obtain the effects of both modification example 1 and modification example 2. That is, it is possible to curb degradation of the safety of the omnidirectional movable body 1, and to improve the efficiency of the transport that is performed by the omnidirectional movable body 1.

(Modification example 4 of first embodiment)

A case in which the threshold value used for a determination as to the rotational velocity of each wheel is set to one type (the threshold value N only) and the determination of the rotational velocity is set to one step as illustrated in FIG. 7 has been described in the first embodiment described above. A case in which the threshold value used for a determination as to the rotational velocity of each wheel is set to a different threshold value for each wheel, the determination of the rotational velocity is set to a plurality of steps (two steps), and the range of the protection area 401 is reduced will be described in modification example 4 of the first embodiment. A case in which the range of the protection area 401 is reduced and the threshold value of protective stop velocity is changed through a discrimination that an operation is a specific operation before entrance to the docking mode will be described in modification example 4.

(Switching logic for the protection area 401)

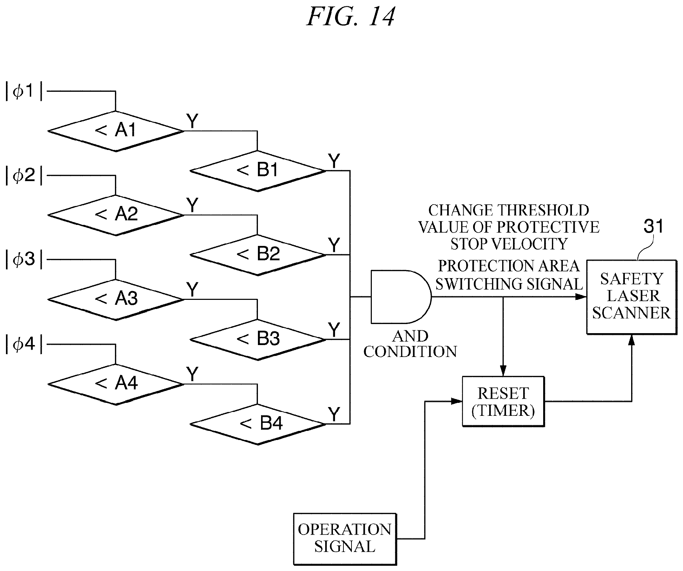

FIG. 14 is a diagram illustrating a logic for switching the protection area 401 according to modification example 4 of the first embodiment. The logic 1400 illustrated in FIG. 14 is a logic that determines whether or not the rotational velocity of each wheel of the mecanum wheel 11 is equal to or lower than the same or different threshold value and outputs a logical product of results of the determination.

Threshold values A1 to A4 and B1 to B4 set for each wheel illustrated in FIG. 14 are values for discriminating a specific operation before entrance to the docking mode. When the rotational velocity $\phi1$ of the mecanum wheel 11a detected by the rotational velocity detector 13a becomes lower than the threshold value A1, thereafter, the velocity monitoring module 32 further waits until the rotational velocity $\phi1$ becomes lower than the threshold value B1.

Similarly, when the rotational velocities $\phi2$ to $\phi4$ of the mecanum wheels 11b to 11d detected by the rotational velocity detectors 13b to 13d are lower than the respective threshold values A2 to A4, thereafter, the velocity monitoring module 32 further waits until the rotational velocities $\phi2$ to $\phi4$ become lower than the threshold values B2 to B4.

When the conditions are sequentially satisfied for all of the rotational velocities $\phi1$ to $\phi4$ and all the two-step conditions illustrated in FIG. 14 are satisfied, that is, when the AND condition is satisfied, the velocity monitoring module 32 is regarded as having performed the specific operation before entrance to the docking mode. Therefore, the velocity monitoring module 32 outputs the switching signal for switching the range of the protection area 401 to the safety laser scanner 31. Accordingly, the safety laser scanner 31 reduces (or invalidates) the protection area 401. Further, the velocity monitoring module 32 changes the threshold value of protective stop velocity from the first threshold value of protective stop velocity (1.1 m/s) to the second threshold value of protective stop velocity (0.3 m/s). Whether or not the specific operation has been performed is not limited to being obtained from the logic, but can also be obtained from a calculation result using the detection result of the rotational velocity of each mecanum wheel 11 and Equation (1).

Further, the main controller 22 outputs an operation signal when a predetermined time has elapsed. Accordingly, the safety laser scanner 31 resets the reduction or invalidation of the protection area 401 or the change of the threshold value of protective stop velocity. The velocity monitoring module 32 may receive the operation signal from the main controller 22 and instruct the safety laser scanner 31 to perform resetting. That is, the safety laser scanner 31 may reset the reduction or invalidation of the protection area 401 or the change of the threshold value of protective stop velocity on the basis of the instruction from the velocity monitoring module 32. Further, the safety laser scanner 31 may directly receive an operation signal indicating the resetting from the main controller 22 and reset the reduction or invalidation of the protection area 401 or the change of the threshold value of protective stop velocity.

Further, the safety laser scanner 31 may reset the reduction or invalidation of the protection area 401 or the change of the threshold value of protective stop velocity on the basis of a measurement result of a timer. The timer may be provided in the velocity monitoring module 32 or may be provided in the safety laser scanner 31. Further, the timer may be able to measure a time required for an operation in the docking mode, for example. When the timer is provided in the velocity monitoring module 32, the safety laser scanner 31 may reset reduction or invalidation of the protection area 401 or the change of the threshold value of protective stop velocity on the basis of an instruction based on the measurement result of the timer from the velocity monitoring module 32.

According to modification example 4 of the first embodiment, when the omnidirectional movable body 1 performs the specific operation before entrance to the docking mode, it is possible to prevent the safety laser scanner 31 from detecting the transport target object 500 as an obstacle. Therefore, it is possible to reduce the range of the protection area 401 and to curb degradation of the safety. Further, since the range of the protection area 401 can be reduced at a more appropriate timing, it is possible to improve the efficiency of the transport that is performed by the omnidirectional movable body 1. Further, since it is possible to curb the omnidirectional movable body 1 being at a movement velocity equal to or higher than the second threshold value of protective stop velocity near the transport target object 500, it is possible to safely operate the omnidirectional movable body 1.

Further, according to modification example 4 of the first embodiment, it is possible to discriminate that the operation is the specific operation before entrance to the docking mode without using the operation signal from the main controller 22, and to change the range of the protection area 401 and the threshold value of protective stop velocity. This makes it possible to curb a load related to the output of the operation signal that is performed by the main controller 22.

Modification example 4 of the first embodiment may be applied to the modification 1 of the first embodiment. That is, the range of the protection area 401 and the threshold value of protective stop velocity may be changed by using the operation signal output from the main controller 22. Specifically, the range of the protection area 401 and the threshold value of protective stop velocity may be changed according to the logical product of "the logical product of the rotational velocities $\phi1$ to $\phi4$ satisfying all the two-step conditions illustrated in FIG. 14" and "the operation signal output from the main controller 22".

Accordingly, when the omnidirectional movable body 1 performs the specific operation (when performing docking with the transport target object 500) at a position in which the transport target object 500 is disposed, it is possible to prevent the safety laser scanner 31 from detecting the transport target object 500 as an obstacle. Therefore, it is possible to curb the safety being degraded due to reduction of the range of the protection area 401 at an inappropriate position. Further, since the range of the protection area 401 can be reduced at a more appropriate timing, it is possible to improve the efficiency of the transport that is performed by the omnidirectional movable body 1. Further, when the monitoring area is reduced (when the omnidirectional movable body 1 is docked with the transport target object 500), it is possible to curb the omnidirectional movable body 1 becoming at a movement velocity equal to or higher than the second threshold value of protective stop velocity, and thus, to safely operate the omnidirectional movable body 1.

(Modification example 5 of first embodiment)

In the first embodiment described above, a case in which the range of the protection area 401 and the threshold value of protective stop velocity are changed according only to the rotational velocity of each wheel has been described. A case in which the range of the protection area 401 and the threshold value of protective stop velocity are changed according to a logical product of "the logical product of the rotational velocities of the respective wheels being equal to or lower than the threshold value" and "the result of the detecting the rotation abnormality will be described in modification example 5 of the first embodiment.

Equations (5) and (6) are used for detection of an abnormality in the rotational velocity of each wheel of the mecanum wheel 11.

[Math. 5]

$$\phi 1 - \phi 2 - \phi 3 + \phi 4 = h \qquad (5)$$

[Math. 6]

$$|h| > \xi \qquad (6)$$

In an ideal state in which there is no abnormality in the rotational velocity detector 13 and there is no slippage between a road surface and the wheels, "|h|" shown in Equation (5) becomes zero. On the other hand, when at least one of the values of $\phi 1$ to $\phi 4$ indicates an abnormal value, "|h|" indicates a value other than zero. Therefore, "$\xi$" is set as an allowable value so that an abnormal value can be determined using Equation (6).

Here, in the forward kinematics equation (1) described above, a relationship between $\phi 1, \phi 2, \phi 3, \phi 4$ and Vx, Vy, $\omega$ is shown. In Equation (1), $\phi 1, \phi 2, \phi 3,$ and $\phi 4$ can theoretically have arbitrary values, but in reality, they cannot have arbitrary values due to a constraint condition between the road surface and the wheels.

On the other hand, in the inverse kinematics equation (2) described above, Vx, Vy, and $\omega$ can have arbitrary values. Equation (6) is an equation for determining that any value of $\phi 1$ to $\phi 4$ deviating from the constraint condition in Equation (1) has been input.

Using the forward kinematics equation (1),

when $\phi 1$ = -10, $\phi 2$ = -10, $\phi 3$ = 10, $\phi 4$ = 10,
Vx = 1, Vy = 0, $\omega$ = 0
In this case, |h|= 0.

Next, using the forward kinematics equation (1),

when $\phi 1$ = 0, $\phi 2$ = -10, $\phi 3$ =10, $\phi 4$ = 10,
Vx = 0.75, Vy = -0.25, $\omega$ = -0.4835
In this case, |h|= 10.

Since h $\neq$ 0, a determination can be made that there is an abnormality in the rotational velocity of some wheels.

When the obtained Vx, Vy, and $\omega$ are applied to Equation (2) of inverse kinematics, $\phi 1$ = -2.49, $\phi 2$ = -7.49, $\phi 3$ = 12.5, $\phi 4$ = 7.5, and since these contradict with the input values,

$\phi 1 = 0, \phi 2 = -10, \phi 3 = 10,$ and $\phi 4 = 10$, a determination can be made that there is an abnormality in the rotational velocities of some of the wheels.

(Step of switching the protection area 401)

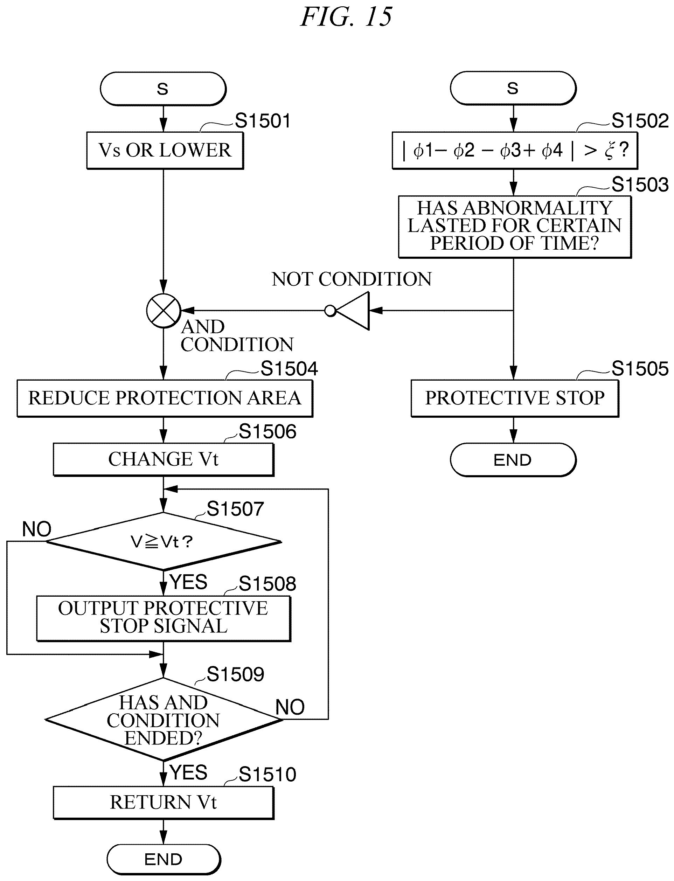

FIG. 15 is a sequence diagram illustrating a step of switching of the protection area 401 and the threshold value of protective stop velocity, which is performed by the omnidirectional movable body 1 according to modification example 5 of the first embodiment. In step S1501 of FIG. 15, the velocity monitoring module 32 waits until the velocity of the omnidirectional movable body 1 becomes the low velocity value Vs or lower. Specifically, the velocity monitoring module 32 waits until all of the rotational velocities $\phi 1$ to $\phi 4$ of the mecanum wheels 11a to 11d detected by the rotational velocity detectors 13a to 13d become lower than the threshold value N.

Further, the velocity monitoring module 32 waits until an abnormality is detected, that is, until "|h| < ξ" is obtained in step S1502. When the abnormality is detected, the velocity monitoring module 32 determines whether or not the abnormality has lasted for a certain period of time in step S1503. Here, for example, an averaging filter is used to determine whether or not the abnormality has lasted for the certain period of time. This makes it possible to curb a rotation abnormality being determined and the omnidirectional movable body 1 being stopped due to noise or temporary wheel slippage.

When the abnormality does not last for a certain period of time, the NOT condition is satisfied. It is assumed that an AND condition of the satisfaction of the NOT condition and the velocity of the omnidirectional movable body 1 becoming equal to or lower than the low velocity value Vs in step S1501 has been satisfied. In this case, the velocity monitoring module 32 outputs the switching signal for switching the range of the protection area 401 to the safety laser scanner 31. Accordingly, the safety laser scanner 31 reduces (or invalidates) the protection area 401 (step S1504).

On the other hand, when the abnormality lasts for the certain period of time, the velocity monitoring module 32 outputs a protection stop signal for stopping the omnidirectional movable body 1. The protection stop signal is output from the velocity monitoring module 32 to the circuit breaker 33 directly or to the circuit breaker 33 via other devices (the main controller 22, the motor control circuit 23, the safety laser scanner 31, and the like). When the circuit breaker 33 inputs a stop signal, the drive motor 12 is stopped (step S1505), and a series of steps ends.

After the protection area 401 is reduced in step S1504, the velocity monitoring module 32 changes the threshold value of protective stop velocity Vt from the first threshold value of protective stop velocity (1.1 m/s) to the second threshold value of protective stop velocity (0.3 m/s) (step S1506). However, a condition for changing the threshold value of protective stop velocity Vt to the second protective stop velocity is not limited to the satisfaction of the AND condition and may be that the muting signal is output from the main controller 22. Further, the velocity monitoring module 32 determines whether or not the current movement velocity V of the omnidirectional movable body 1 is equal to or higher than the second threshold value of protective stop velocity (0.3 m/s) (step S1507). The movement velocity V of the omnidirectional movable body 1 can be calculated by using, for example, the result of detecting the rotational velocity of each mecanum wheel 11 and Equation (1).

When the current movement velocity V of the omnidirectional movable body 1 is lower than the second threshold value of protective stop velocity (0.3 m/s) (step S1507: NO), the velocity monitoring module 32 proceeds to step S1509. When the current movement velocity V of the omnidirectional movable body 1 is equal to or higher than the second threshold value of protective stop velocity (0.3 m/s) (step S1507: YES), the velocity monitoring module 32 outputs the protective stop signal 43 to the circuit breaker 33 (step S1508). Accordingly, the omnidirectional movable body 1 makes an protective stop.

The velocity monitoring module 32 determines whether or not the AND condition has ended (step S1509). When the AND condition has not ended (step S1509: NO), the velocity monitoring module 32 returns to step S1507. When the AND condition has ended (step S1509: YES), the reduction of the protection area 401 is released, the threshold value of protective stop velocity Vt is returned to the first threshold value of protective stop velocity (1.1 m/s) (step S1510), and a series of steps end. When the condition for changing the threshold value of protective stop velocity Vt to the second protective stop velocity is the output of the muting signal, a determination may be made as to whether or not the output of the muting signal from the main controller 22 has stopped in step S1509. When the output of the signal is stopped, the velocity monitoring module 32 may return the threshold value of protective stop velocity Vt to the first threshold value of protective stop velocity (1.1 m/s).

According to modification example 5 of the first embodiment, in a case in which the omnidirectional movable body 1 travels at a low velocity (the low velocity value Vs or lower) when there is a rotation abnormality or when there is no abnormality in the rotational velocity detector 13, it is possible to reduce the range of the protection area 401 of the safety laser scanner 31 and decrease the threshold value of protective stop velocity. Therefore, when there is no rotation abnormality and the rotational velocity detector 13 is operating normally, the range of the protection area 401 is reduced and the omnidirectional movable body 1 is prevented from being at a movement velocity equal to or higher than the second threshold value of protective stop velocity so that the omnidirectional movable body 1 can pick up the transport target object 500. Therefore, it is possible to appropriately operate the omnidirectional movable body 1 while improving the safety.

Further, according to modification example 5 of the first embodiment, it is possible to stop the omnidirectional movable body 1 when there is a rotation abnormality or when there is an abnormality in the rotational velocity detector 13. Therefore, it is possible to further improve the safety.

Further, in modification example 5 according to the first embodiment, when the rotation abnormality of the wheel is detected for a certain period of time, the omnidirectional movable body 1 is stopped. Therefore, it is possible to curb the omnidirectional movable body 1 being stopped by determining that there is a rotation abnormality of the wheel due to noise or temporary wheel slippage. This makes it possible to improve the efficiency of the transport that is performed by the omnidirectional movable body 1.

(Second embodiment)

In the first embodiment described above, a case in which the drive wheels of the omnidirectional movable body 1 are four mecanum wheels 11 has been described. In a second embodiment, a case in which the drive wheels of the omnidirectional movable body 1 are four omni-wheels will be described.

(Coordinate system of omni-wheels 1601a to 1601d)

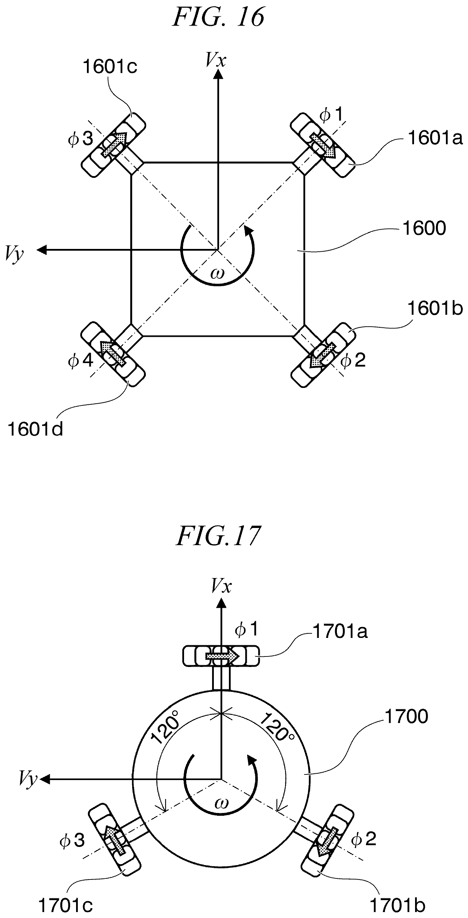

FIG. 16 is a diagram illustrating an example of a coordinate system of an omnidirectional movable body 1600 and omni-wheels 1601a to 1601d. The omni-wheels 1601a to 1601d are simply referred to as an "omni-wheel 1601" when it is not necessary to distinguish the omni-wheels 1601a to 1601d. As illustrated in FIG. 16, the omnidirectional movable body 1600 includes four omni-wheels 1601. In the four omni-wheels 1601, an axle connecting the omni-wheel 1601a to the omni-wheel 1601d and an axle connecting the omni-wheel 1601b to the omni-wheel 1601c pass through a center of the omnidirectional movable body 1600 and are disposed at an angle of 90°.

In FIG. 16, a traveling direction (forward direction) of the omnidirectional movable body 1600 is defined as an x-axis, a lateral direction is defined as a y-axis, and a direction perpendicular to a paper surface is defined as a z-axis (not illustrated). Further, for the x-axis, a top direction in FIG. 16 is a positive direction. For the y-axis, a left direction in FIG. 16 is a positive direction. Further, for a turning direction, a counterclockwise direction in FIG. 16 is a positive direction. Further, a velocity of the omnidirectional movable body 1600 in the forward direction is defined as Vx. A velocity of the omnidirectional movable body 1600 in the lateral direction is defined as Vy. Further, a turning velocity of the omnidirectional movable body 1600 is defined as $\omega$.

For a rotation direction of each omni-wheel 1601, a counterclockwise direction toward a direction in which the omni-wheel 1601 is attached to the omnidirectional movable body 1600 (a center of the omnidirectional movable body 1600) is positive (plus). Further, a rotational velocity of the wheel of the omni-wheel 1601a is $\phi1$, a rotational velocity of the wheel of the omni-wheel 1601b is $\phi2$, a rotational velocity of the wheel of the omni-wheel 1601c is $\phi3$, and a rotational velocity of the wheel of the omni-wheel 1601d is $\phi4$.

Equations (1) to (3) described above can be applied to the omni-wheel 1601, similar to the mecanum wheel 11 described in the first embodiment. Therefore, the main controller 22 can output the calculated target rotational velocity to the motor control circuit 23 to move the omnidirectional movable body 1600 at a desired velocity in a desired direction.

Further, whether or not the omnidirectional movable body 1600 retreats with respect to the main traveling direction can be determined using Equation (4) described above, similar to modification example 2 of the first embodiment. Further, the presence or absence of an abnormality in the rotational velocity of each omni-wheel 1601 can be determined using Equations (5) and (6) described above, similar to modification example 5 of the first embodiment.

Therefore, according to the omnidirectional movable body 1600 using the omni-wheel 1601 according to the second embodiment, it is possible to achieve the same effects as those of the omnidirectional movable body 1 using the mecanum wheel 11 shown in the first embodiment. Further, in the second embodiment, each of the modification examples shown in modification examples 1 to 5 of the first embodiment can be applied.

(Third embodiment)

A case in which the drive wheels of the omnidirectional movable body 1 are four omni-wheels has been described in the second embodiment described above. A case in which the drive wheels of the omnidirectional movable body 1 are three omni-wheels will be described in a third embodiment.

(Coordinate system of omni-wheels 1701a to 1701c)

FIG. 17 is a diagram illustrating an example of a coordinate system of the omnidirectional movable body 1700 and the omni-wheels 1701a to 1701c. The omni-wheels 1701a to 1701c are simply referred to as an "omni-wheel 1701" when it is not necessary to distinguish the omni-wheels 1701a to 1701c. As illustrated in FIG. 17, the omnidirectional movable body 1700 includes three omni-wheels 1701. The three omni-wheels 1701 are disposed so that respective axles thereof pass through the center of the omnidirectional movable body 1700. Further, the three omni-wheels 1701 are disposed so that a distance between the axles form an angle of 120°.

In FIG. 17, a traveling direction (forward direction) of the omnidirectional movable body 1700 is defined as an x-axis, a lateral direction is defined as a y-axis, and a direction perpendicular to a paper surface is defined as a z-axis (not illustrated). Further, for the x-axis, a top direction in FIG. 17 is a positive direction. For the y-axis, a left direction in FIG. 17 is a positive direction. Further, for a turning direction, a counterclockwise direction in FIG. 17 is a positive direction. Further, a velocity of the omnidirectional movable body 1700 in the forward direction is defined as Vx. A velocity of the omnidirectional movable body 1700 in the lateral direction is defined as Vy. Further, a turning velocity of the omnidirectional movable body 1700 is defined as ω.

For a rotation direction of each omni-wheel 1701, a counterclockwise direction toward a direction in which the omni-wheel 1701 is attached to the omnidirectional movable body 1700 (a center of the omnidirectional movable body 1700) is positive (plus). Further, a rotational velocity of the wheel of the omni-wheel 1701a is $\phi1$, a rotational velocity of the wheel of the omni-wheel 1701b is $\phi2$, and a rotational velocity of the wheel of the omni-wheel 1701c is $\phi3$.

Here, a relationship between a rotational velocity of each omni-wheel 1701 and a movement velocity of the omnidirectional movable body 1700 for the omnidirectional movable body 1700 including the three omni-wheels 1701 will be described. The rotational velocity of each omni-wheel 1701 and the movement velocity of the omnidirectional movable body 1 can be expressed using Equation (7). Equation (7) is an equation called forward kinematics.

[Math. 7]

$$\begin{pmatrix} V_x \\ V_y \\ \omega \end{pmatrix} = R_w \cdot C \begin{pmatrix} \Phi_1 \\ \Phi_2 \\ \Phi_3 \end{pmatrix} \tag{7}$$

C is a 3 × 3 matrix.

Rw indicates a wheel radius.

Matrix components include a coefficient related to a wheel disposition of the omni-wheel 1701.

On the other hand, Equation (8) is an equation called inverse kinematics. Equation (8) is a calculation equation for calculating a required wheel rotational velocity from a target velocity of the omnidirectional movable body 1700.

[Math. 8]

$$\begin{pmatrix} \Phi_1 \\ \Phi_2 \\ \Phi_3 \\ \Phi_4 \end{pmatrix} = \frac{1}{R_w} \cdot D \begin{pmatrix} V_x \\ V_y \\ \omega \end{pmatrix} \tag{8}$$

D is a 3 × 3 matrix.

Matrix components include a wheel diameter of the omni-wheel 1701 or a coefficient related to a wheel disposition. The main controller 22 calculates target rotational velocities of the three omni-wheels 1701 from the target velocities of the omnidirectional movable body 1700 using the relationships of Equations (7) and (8). The main controller 22 outputs the calculated target rotational velocity to the motor control circuit 23 so that the omnidirectional movable body 1700 is moved at a desired velocity in a desired direction.

(Velocity determination logic)

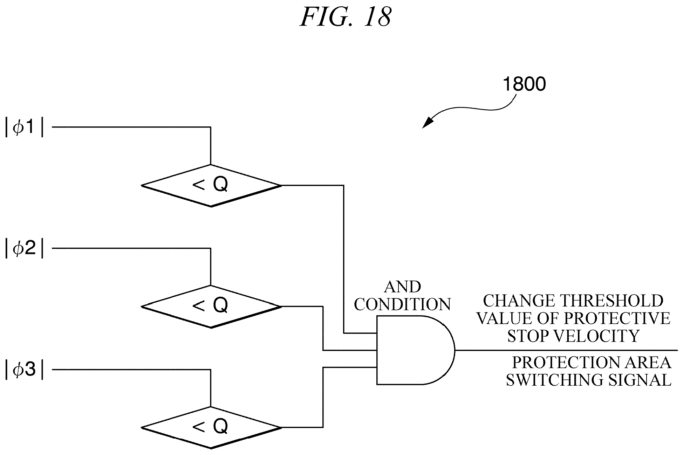

FIG. 18 is a diagram illustrating a velocity determination logic according to the third embodiment. A logic 1800 illustrated in FIG. 18 is a logic that determines whether or not the rotational velocity of each omni-wheel 1701 is equal to or lower than a threshold value and outputs a logical product of results of the determinations. Specifically, the logic 1800 indicates a logic that outputs a switching signal for the protection area 401 when all of the rotational velocities $\phi1$ to $\phi3$ is lower than the threshold value Q, that is, when the AND condition is satisfied.

All of the rotational velocities $\phi1$ to $\phi3$ of the omni-wheels 1701a to 1701c detected by the rotational velocity detectors 13a to 13d being lower than the threshold value Q indicates that the omnidirectional movable body 1700 is below the threshold value (at a low velocity). That is, a result of outputting the logical product in the logic 1800 indicates that the omnidirectional movable body 1700 is below the threshold value (at a low velocity).

When all of the rotational velocities $\phi1$ to $\phi3$ are lower than the threshold value Q, the velocity monitoring module 32 outputs the switching signal for switching the range of the protection area 401 to the safety laser scanner 31. Accordingly, the safety laser scanner 31 can reduce the range of the protection area 401 when the omnidirectional movable body 1700 travels at a low velocity. Further, when all of the rotational velocities $\phi1$ to $\phi3$ are lower than the threshold value Q, the velocity monitoring module 32 changes the threshold value of protective stop velocity from the first threshold value of protective stop velocity (1.1 m/s) to the second threshold value for protective stop velocity (0.3 m/s).

However, the change of the threshold value of protective stop velocity to the second protective stop velocity is not limited to the velocity of the omnidirectional movable body 1700 being equal to or lower than the low velocity value Vs and may be performed when the muting signal is output from the main controller 22.

Here, the respective rotational velocities of the three omni-wheels 1701a to 1701c are detected, and when all of the rotational velocities are equal to or lower than the threshold value, a discrimination is made that the omnidirectional movable body 1700 is traveling at a low velocity, but the present invention is not limited thereto. For example, the movement velocity may be calculated using the detection results of the rotational velocities of the omni-wheels 1701a to 1701c and Equation (7), and a discrimination may be made from the calculation results that the omnidirectional movable body 1700 is traveling at a low velocity.

According to the omnidirectional movable body 1700 in which the three omni-wheels 1701 are used according to the third embodiment described above, it is possible to achieve the same effects as those of the omnidirectional movable body 1 using the mecanum wheels 11 shown in the first embodiment.

Further, the modification examples corresponding to modification examples 1, 3 to 5 of the first embodiment can be applied in the third embodiment. A case in which the range of the protection area 401 is reduced according to the logical product of "the logical product of the rotational velocities of the respective wheels being equal to or lower than the threshold value" and "the result of the detecting the rotation abnormality" shown in modification example 5 of the first embodiment will be supplemented. In the case of the omnidirectional movable body 1700 including the three omni-wheels 1701, the rotational velocity of each wheel can be arbitrarily set, so that the abnormality in the number of rotations cannot be detected only from the rotational velocity of each of the three omni-wheels 1701. That is, it is not possible to obtain equations corresponding to Equations (5) and (6) shown in modification example 5 of the first embodiment.

Therefore, when a difference between a target value of the rotational velocity based on an instruction of the main controller 22 and an actual number of rotations of the wheel detected by the rotational velocity detector 13 is greater than a predetermined threshold value, an abnormality may be regarded as occurring. Accordingly, in the omnidirectional movable body 1700 including the three omni-wheels 1701, the range of the protection area 401 and the threshold value of protective stop velocity can be changed according to the logical product of "the logical product of the rotational velocities of the respective wheels being equal to or lower than the threshold value" and "the result of the detecting the rotation abnormality".

(Modification example 1 of third embodiment)

An example corresponding to modification example 2 of the first embodiment will be described in modification example 1 of the third embodiment. In the third embodiment described above, a case in which the range of the protection area 401 is reduced according to the result of outputting the logical product in which the result of determining the rotational velocity of each wheel has been used has been described. A case in which the range of the protection area 401 and the threshold value of protective stop velocity are changed according to a logical sum of "the logical product of the rotational velocities of the respective wheels being equal to or lower than the threshold value" and "the calculation value calculated using the rotational velocity of each omni-wheel 1701" will be described in modification example 1 of the third embodiment.

The calculation value referred to here is used for a determination of the main movement velocity Vx of the omnidirectional movable body 1700 in the x direction (also referred to as a "main traveling direction"). A case in which, when the calculation value is smaller than a predetermined value m, the range of the protection area 401 is reduced will be described in modification example 1. Equation (9) indicates an equation for determining the velocity of the omnidirectional movable body 1 with respect to the main traveling direction.

[Math. 9]

$$k1 \cdot \phi 1 + k2 \cdot \phi 2 + k3 \cdot \phi 3 < m \qquad (9)$$

m is a determination threshold value.

k1, k2, and k3 are all appropriate coefficients.

In the example illustrated in FIG. 17, for example, when k1 = 0, k2 = -1, and k3 = 1, Equation (9) is expressed as Equation (10).

[Math. 10]

$$-\phi 2 + \phi 3 < m \qquad (10)$$

It is possible to determine, for example, that the omnidirectional movable body 1700 retreats by using the determination results based on Equations (9) and (10).

In modification example 1 of the third embodiment, a logic that outputs a logical sum (a result of an OR condition) of the output result of the logic 1800 illustrated in FIG. 18 and the determination result in which the calculation value calculated by using the respective rotational velocities of the omni-wheels 1701 has been used is used. Using this logic, the velocity monitoring module 32 outputs a signal for reducing the protection area 401 when the OR condition thereof is satisfied. Accordingly, the omnidirectional movable body 1 can reduce the range of the protection area 401. Further, when the OR condition thereof is satisfied, the velocity monitoring module 32 can change the threshold value of protective stop velocity to the second threshold value of protective stop velocity. In modification example 1 according to the third embodiment, when the omnidirectional movable body 1 retreats, the velocity monitoring module 32 may change only the threshold value of protective stop velocity in the backward direction to the second threshold value for protective stop velocity (0.3 m/s).

According to modification example 1 of the third embodiment, it is possible to reduce the range of the protection area 401 not only when the movement velocity of the omnidirectional movable body 1700 decreases, but also when the omnidirectional movable body 1700 retreats, for example. For example, in a case in which the omnidirectional movable body 1700 retreats near the transport target object 500 such as a case in which the omnidirectional movable body 1 is oriented in a direction (facing direction) with respect to the transport target object 500, it is possible to appropriately reduce the range of the protection area 401 and prevent the transport target object 500 from being detected as an obstacle. Therefore, it is possible to improve the efficiency of the transport that is performed by the omnidirectional movable body 1700.

Further, according to modification example 1 of the third embodiment, it is possible to decrease the threshold value of protective stop velocity Vt not only when the movement velocity of the omnidirectional movable body 1700 decreases (the low velocity value Vs or lower), but also when the omnidirectional movable body 1 retreats. For example, in a case in which the omnidirectional movable body 1 retreats near the transport target object 500 such as a case in which the omnidirectional movable body 1 is oriented in a direction (facing direction) with respect to the transport target object 500, it is possible to curb the backward movement velocity of the omnidirectional movable body 1 becoming a movement velocity equal to or higher than the second threshold value of protective stop velocity, and thus, to safely operate the omnidirectional movable body 1.

(Fourth embodiment)

A case in which the second threshold value of protective stop velocity is changed to the same velocity in all directions has been described in the first to third embodiments described above. A case in which the second threshold value of protective stop velocity can be changed to a different velocity according to the traveling direction of the omnidirectional movable body 1 will be described in the fourth embodiment.

In the fourth embodiment, an area to be monitored may be limited as in a case in which the omnidirectional movable body 1 performs a determined operation, such as orientation in a direction (facing direction) with respect to the transport target object 500, near the transport target object 500. Further, for example, when the omnidirectional movable body 1 that has finished work is disposed along a wall, the protection area 401 may be reduced only on one side surface.

In view of this, when the velocity monitoring module 32 changes the threshold value of protective stop velocity, the velocity monitoring module 32 can change the threshold value of protective stop velocity to a different velocity according to the traveling direction of the omnidirectional movable body 1. Specifically, the velocity monitoring module 32 can set a direction in which the velocity monitoring module 32 changes the threshold value of protective stop velocity to the second threshold value of protective stop velocity to only a right direction or to only a backward direction on the basis of the movement plan.

The velocity monitoring module 32 may reduce only a right direction of the monitoring area 400 (for example, the protection area 401) when changing the threshold value of protective stop velocity in only the right direction to the second threshold value of protective stop velocity. That is, a direction in which the range of the monitoring area 400 is reduced may be a direction according to the traveling direction of the omnidirectional movable body 1.

Further, the velocity monitoring module 32 may decrease the threshold value of protective stop velocity in a direction according to a calculation result indicating a moving state of the omnidirectional movable body 1. Specifically, for example, when a determination is made from the calculation result using Equation (4) that the omnidirectional movable body 1 is retreating, the velocity monitoring module 32 may decrease the threshold value of protective stop velocity only in the backward direction.

(Step of switching threshold value of protective stop velocity in specific direction)

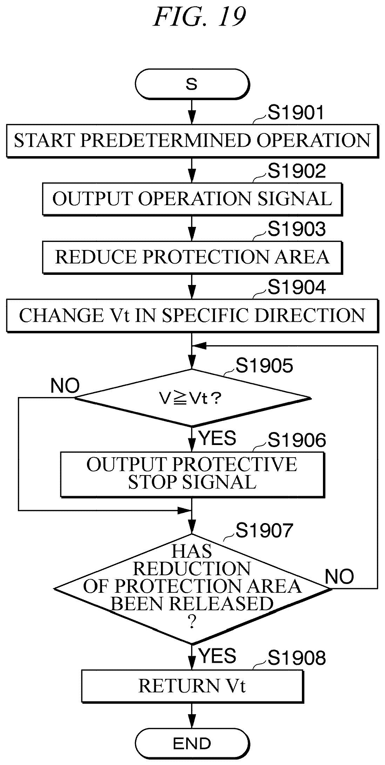

FIG. 19 is a flowchart illustrating a step of changing the threshold value of protective stop velocity in the specific direction, which is performed by the omnidirectional movable body 1 according to the fourth embodiment. In step S1901 of FIG. 19, the main controller 22 refers to the movement plan and waits until the docking mode indicating the start of transport of the transport target object 500 of the omnidirectional movable body 1 is started or a predetermined operation such as disposing the omnidirectional movable body 1 that has finished the work at a predetermined position is started. When the predetermined operation is started, the main controller 22 outputs an operation signal (for example, a muting signal) to the velocity monitoring module 32 (step S1902). It is assumed that this operation signal includes information indicating a moving direction of the omnidirectional movable body 1.

When the operation signal is input from the main controller 22, the velocity monitoring module 32 outputs the switching signal for switching the range of the protection area 401 to the safety laser scanner 31. Accordingly, the safety laser scanner 31 reduces (or invalidates) the protection area 401 (step S1903).

The velocity monitoring module 32 changes the threshold value of protective stop velocity Vt from the first threshold value of protective stop velocity (1.1 m/s) to the second threshold value of protective stop velocity (0.3 m/s) in the specific direction (for example, right direction) indicated by the movement plan (for example, the operation signal) (step S1904). Further, the velocity monitoring module 32 determines whether or not the current movement velocity V of the omnidirectional movable body 1 is equal to or higher than the second threshold value of protective stop velocity (0.3 m/s) in the specific direction (step S1905). The movement velocity V of the omnidirectional movable body 1 can be calculated by using, for example, the result of detecting the rotational velocity of each mecanum wheel 11 and Equation (1).

When the current movement velocity V of the omnidirectional movable body 1 is lower than the second threshold value of protective stop velocity (0.3 m/s) in the specific direction (step S1905: NO), the velocity monitoring module 32 proceeds to step S1907. When the current movement velocity V of the omnidirectional movable body 1 is equal to or higher than the second threshold value of protective stop velocity (0.3 m/s) in the specific direction (step S1905: YES), the velocity monitoring module 32 outputs the protective stop signal 43 to the circuit breaker 33 (step S1906). Accordingly, the omnidirectional movable body 1 makes an protective stop.

The velocity monitoring module 32 determines whether or not the reduction of the protection area 401 has been released (step S1907). The release of the reduction of the protection area 401 is performed according to the movement plan and, for example, the output of the operation signal (muting signal) from the main controller 22 ends. when the reduction of the protection area 401 is not released (step S1907: NO), the velocity monitoring module 32 returns to step S1905. When the reduction of the protection area 401 is released (step S1907: YES), the threshold value of protective stop velocity Vt in the specific direction is returned to the first threshold value of protective stop velocity (1.1 m/s) (step S1908), and a series of steps end.

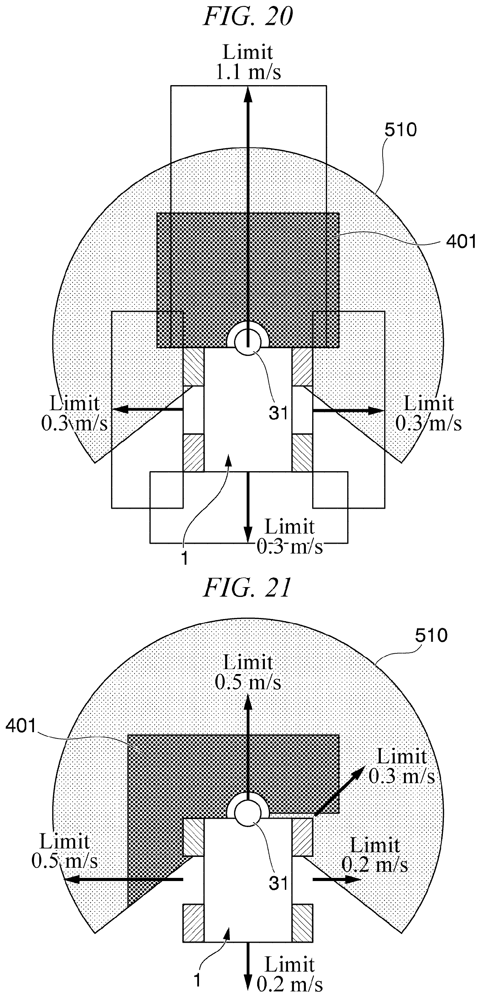

FIG. 20 is a diagram illustrating an example of the threshold value of protective stop velocity according to the fourth embodiment. As illustrated in FIG. 20, a state in which the protection area 401 is reduced in front of the omnidirectional movable body 1 is shown. The protection area 401 may be invalid. A threshold value of protective stop velocity for forward is 1.1 m/s, and threshold values of protective stop velocity for left, right, backward are 0.3 m/s. That is, it is shown that when the protection area 401 is reduced, the omnidirectional movable body 1 makes an protective stop when the movement velocity of the omnidirectional movable body 1 reaches 0.3 m/s in the left-right and backward directions. Further, it is shown that the omnidirectional movable body 1 makes an protective stop when the movement velocity of the omnidirectional movable body 1 reaches 1.1 m/s in the forward direction.

FIG. 21 is a diagram illustrating another example of the threshold value of protective stop velocity according to the fourth embodiment. As illustrated in FIG. 21, a state in which the protection area 401 is reduced in front of the omnidirectional movable body 1 is shown. The protection area 401 can also be reduced for a specific area according to the movement plan. The threshold value of protective stop velocity is 0.5 m/s for forward, 0.3 m/s for diagonally right forward, 0.2 m/s for right, 0.5 m/s for left, and 0.2 m/s for backward. That is, it is shown that when the protection area 401 is reduced, for example, when the movement velocity of the omnidirectional movable body 1 reaches 0.3 m/s forward diagonally to the right, an protective stop is made.

According to the omnidirectional movable body 1 of the fourth embodiment described above, it is possible to reduce the range of the protection area 401 of the safety laser scanner 31 and decrease the threshold value of protective stop velocity Vt according to the operation signal from the main controller 22. Accordingly, the protection area 401 can be reduced when the vehicle approaches the transport target object 500 and travels at a low velocity, and it is possible to curb the omnidirectional movable body 1 operating at a movement velocity equal to or higher than the second threshold value of protective stop velocity. Therefore, it is possible to curb the omnidirectional movable body 1 coming into contact with the transport target object 500 or the like, and to safely operate the omnidirectional movable body 1.

Further, according to the omnidirectional movable body 1 of the fourth embodiment, it is possible to decrease the threshold value of protective stop velocity Vt in the specific direction. Therefore, since the threshold value of protective stop velocity is not decreased in directions other than the specific direction, it is possible to make it difficult for the omnidirectional movable body 1 to make an protective stop. Therefore, it is possible to more effectively curb the degradation in the movement efficiency of the omnidirectional movable body 1.

(Functional configurations in first to fourth embodiments)

Next, functional configurations of the omnidirectional moving bodies 1, 1600, and 1700 (hereinafter referred to as "omnidirectional movable body 1 or the like") according to the first to fourth embodiments described above will be described. The omnidirectional movable body 1 or the like include drive wheels, a movement velocity detection unit, an object detection unit, a movement control unit, a changing unit, and a stopping unit.

The drive wheels are three or more drive wheels for moving the omnidirectional movable body 1 or the like in all directions, and are driven independently. For the drive wheels, for example, any of four mecanum wheels 11a to 11d (see FIG. 3), four omni-wheels 1601a to 1601d (see FIG. 16), and three omni-wheels 1701a to 1701c (see FIG. 17) can be used.

A rotational velocity detection unit detects the rotational velocity of each of the drive wheels. The rotational velocity detection unit is realized by the rotational velocity detectors 13a to 13d (see FIG. 1A). The rotary encoder has been used for the rotational velocity detection unit (rotational velocity detectors 13a to 13d), but the present invention is not limited thereto. For example, another velocity sensor such as a tacho generator or a resolver may be used for the rotational velocity detection unit. Further, a signal output from the rotational velocity detection unit may be an analog voltage value or may be a

digital value obtained by converting the analog voltage value.

The movement velocity detection unit detects the movement velocity of the movable body using the rotational velocity of each drive wheel. The movement velocity detection unit detects the movement velocity from a calculation result in which the rotational velocities $\phi1$ to $\phi4$ detected by the rotational velocity detector 13 and Equation (1) have been used. For a specific velocity (for example, 0.3 m/s), the movement velocity detection unit can detect the movement velocity from the logical product of the rotational velocities $\phi1$ to $\phi4$ detected by the rotational velocity detector 13. That is, when the low velocity value Vs and the second threshold value of protective stop velocity are set to the specific velocity (0.3 m/s), the movement velocity detection unit can detect the movement velocity from the logical product of the rotational velocities $\phi1$ to $\phi4$.

The object detection unit detects an object within the monitoring area 400 set around the omnidirectional movable body 1 or the like. The object is an obstacle such as a person or an object. The monitoring area 400 includes the protection area 401 and the warning area 402. The object detection unit is realized by, for example, the safety laser scanner 31 (see FIG. 1A). However, the object detection unthe present invention is not limited to the safety laser scanner 31, and it is also possible to use a camera that images an object or use another sensor such as an ultrasonic sensor. Further, a plurality of object detection units may be provided. For example, the object detection unit may be provided on the left, right, or rear of the omnidirectional movable body 1 or the like.

The movement control unit moves the omnidirectional movable body 1 or the like according to the movement plan. The movement control unit performs entire control of the omnidirectional movable body 1 or the like. The movement control unit is realized by, for example, the main controller 22.

The stopping unit and the changing unit are realized by the velocity monitoring module 32, which is an example of the control device. The stopping unit stops the omnidirectional movable body 1 or the like when the movement velocity detected by the movement velocity detection unit reaches a threshold value of velocity (the threshold value of protective stop velocity). The stopping unit outputs the protective stop signal 43 to the circuit breaker 33 to stop the omnidirectional movable body 1 or the like (FIG. 1A).

The changing unit changes the range of the monitoring area 400 and the threshold value of velocity of the omnidirectional movable body 1 or the like on the basis of the operation signal output from the movement control unit. Further, the changing unit changes the range of the monitoring area 400 and the threshold value of velocity on the basis of the operation signal and the movement velocity detected by the movement velocity detection unit. The movement velocity detected by the movement velocity detection unit is obtained on the basis of the respective rotational velocities of the drive wheels detected by the rotational velocity detection unit.

Specifically, when the rotational velocity of each of the drive wheels is equal to or lower than the threshold value, that is, the velocity of the omnidirectional movable body 1 or the like becomes equal to or lower than the low velocity value Vs (for example, 0.3 m/s), the changing unit reduces the range of the protection area 401 in the monitoring area 400 set in the object detection unit, and changes the threshold value of protective stop velocity to the second threshold value of protective stop velocity. When the rotational velocity (movement velocity) of each of the drive wheels becomes equal to or lower than the threshold value, the changing unit may reduce the range of the protection area 401 and may not change the threshold value of protective stop velocity.

Even when the operation signal is not output from the movement control unit, the changing unit may change the range of the monitoring area 400 and the threshold value of velocity in a case in which the velocity of the omnidirectional movable body 1 or the like becomes the low velocity value Vs (for example, 0.3 m/s) or lower. Further, the changing unit can change the threshold value of protective stop velocity to a different velocity according to the traveling direction of the omnidirectional movable body 1 or the like.

When the threshold value of protective stop velocity is changed to the second threshold value of protective stop velocity by the changing unit, the stopping unit stops the omnidirectional movable body 1 or the like when the movement velocity detected by the movement velocity detection unit is equal to or higher than the second threshold value of protective stop velocity.

The changing unit may change not only the range of the protection area 401, but also the range of the warning area 402. Further, the changing unit may change only the range of the protection area 401 and not change the range of the warning area 402, or may change only the range of the warning area 402 and not change the range of the protection area 401.

According to at least one of the embodiments described above, the velocity monitoring module 32 (the changing unit) that changes the range of the monitoring area 400 (the protection area 401) and the threshold value of protective stop velocity on the basis of the operation signal from the main controller 22 is included. Accordingly, the range of the protection area 401 can be reduced and the threshold value of protective stop velocity can be changed with a simple configuration without providing a plurality of sensors or the like. Therefore, it is possible to curb the omnidirectional movable body 1 discriminating the transport target object 500 as an obstacle near the transport target object 500 and stopping. Further, when the protection area 401 is reduced, it is possible to curb the omnidirectional movable body 1 or the like being at a movement velocity equal to or higher than the threshold value of protective stop velocity. As a result, it is possible to improve the safety of the omnidirectional movable body 1 or the like. Therefore, it is possible to simply and appropriately operate the omnidirectional movable body 1 while ensuring the reliability of the safety control system Sf.

(Case in which safety control system Sf is realized by hardware or software)

The changing unit determines whether or not the rotational velocity of each drive wheel is equal to or lower than the predetermined value, and changes the range of the monitoring area 400 and the threshold value of protective stop velocity on the basis of a logical product of the results of the determinations. For example, when the AND condition (logical product) indicating that the rotational velocities of the respective mecanum wheels 11 are equal to or lower than the threshold value is satisfied as illustrated in FIG. 7, the changing unit reduces the range of the protection area 401 and decrease the threshold value of protective stop velocity.

Specifically, the velocity monitoring module 32 (the changing unit and the stopping unit) is realized by hardware, for example. However, the velocity monitoring module 32 may be realized by software. That is, functions of the changing unit and the stopping unit may be realized by a CPU executing a predetermined program (a threshold value of velocity change program or a monitoring area change program). In this case, for the velocity monitoring module 32, for example, a safety controller for which safety certification has been acquired is used. However, a normal controller, PC, sequencer, or the like can be used for the velocity monitoring module 32.

Here, when a function of the changing unit and a function of the stopping unit, which are the functions of the safety control system Sf, are realized by software, it is necessary to perform arithmetic processing of calculating the movement velocity of the omnidirectional movable body 1 or the like from the rotational velocity detected by the rotational velocity detector 13. Incorporating this arithmetic processing into the safety control system Sf requires a great deal of time and effort for developers from the viewpoint of ensuring the safety. Specifically, it is necessary to diligently verify presence or absence of bugs or errors and obtain performance indicators such as a performance level (PL) or a safety integrity level (SIL), and thus, it takes a great deal of time and effort in a software development process.

Therefore, it is possible to curb such a large amount of time and cost in the development process by realizing the functions of the changing unit or the stopping unit using a device such as a safety-compatible programmable logic controller (PLC) that uses a variable constraint language. Further, since the arithmetic processing based on software can be eliminated, it is possible to curb a burden on control related to the arithmetic processing. Further, an accurate output result can be obtained with a simple configuration. Therefore, it is possible to appropriately operate the omnidirectional movable body 1 or the like with a simpler configuration, and to improve the safety of the omnidirectional movable body 1 or the like.

(Change in monitoring area 400 and threshold value of protective stop velocity based on calculation value indicating movement velocity)

The changing unit changes the range of the monitoring area 400 and the threshold value of protective stop velocity on the basis of the calculation value indicating the movement velocity of the omnidirectional movable body 1 or the like calculated using the respective rotational velocities of the drive wheels. The calculation value indicating the movement velocity of the omnidirectional movable body 1 or the like is, for example, the main movement velocity Vx shown on the left side of Equation (4) described above. For example, when the main movement velocity Vx becomes lower than 0, that is, when the omnidirectional movable body 1 retreats, the changing unit reduces the range of the protection area 401 and changes the threshold value of protective stop velocity. The determination of the main movement velocity Vx is not limited to "lower than 0" and "lower than a predetermined velocity" may be used. However, the predetermined velocity referred to here may be a value smaller than the low velocity value Vs (for example, 0.3 m/s) indicating a low velocity of the omnidirectional movable body 1 or the like.

Accordingly, in a case in which the omnidirectional movable body 1 is at a lower velocity (the low velocity value Vs or lower) or retreats near the transport target object 500, such as a case in which the omnidirectional movable body 1 is oriented in a direction with respect to the transport target object 500 (a facing direction), it is possible to appropriately reduce the range of the protection area 401 and prevent the transport target object 500 from being detected as an obstacle. Further, when the protection area 401 is reduced, it is possible to curb the omnidirectional movable body 1 operating at a movement velocity equal to or higher than the second threshold value of protective stop velocity. Therefore, it is possible to improve the efficiency of the transport that is performed by the omnidirectional movable body 1 and to safely operate the omnidirectional movable body 1.

(Change in monitoring area 400 and the threshold value of protective stop velocity based on logical sum)

The changing unit determines whether or not the rotational velocity of each drive wheel is equal to or higher than a predetermined value, and changes the range of the monitoring area 400 and the threshold value of protective stop velocity on the basis of a logical sum of a "logical product of the results of the determinations" and a "calculation value indicating the movement velocity of the omnidirectional movable body 1 or the like calculated using the rotational velocity of each drive wheel". Specifically, the changing unit can reduce the range of the protection area 401 and changes the threshold value of protective stop velocity when a condition (OR condition) of any one of the omnidirectional movable body 1 or the like traveling at the low velocity value Vs (for example, 0.3 m/s) or lower or the main movement velocity Vx becoming lower than 0 is satisfied, as illustrated in FIG. 11.

Accordingly, not only in a case in which the omnidirectional movable body 1 approaches the transport target object 500 and travels at a low velocity (the low velocity value Vs or lower), but also in a case in which the omnidirectional movable body 1 is at a lower velocity or retreats such as the omnidirectional movable body 1 is oriented in a direction with respect to the transport target object 500 (a facing direction), it is possible to appropriately reduce the range of the protection area 401 and prevent the transport target object 500 from being detected as an obstacle. Further, when the protection area 401 is reduced, it is possible to curb the omnidirectional movable body 1 operating at a movement velocity equal to or higher than the second threshold value of protective stop velocity. Therefore, it is possible to improve the efficiency of the transport that is performed by the omnidirectional movable body 1 and to safely operate the omnidirectional movable body 1.

(Change in monitoring area 400 based on operation signal)

The changing unit determines whether or not the rotational velocity of each drive wheel is equal to or higher than a predetermined value, and changes the range of the monitoring area 400 and the threshold value of protective stop velocity on the basis of a logical product of a "logical product of the results of the determinations " and an "operation signal for switching the operation of the omnidirectional movable body 1 or the like, which is generated using the movement plan of the omnidirectional movable body 1 or the like". Specifically, the changing unit reduces the range of the protection area 401 and decreases the threshold value of protective stop velocity when both conditions (AND condition) of the omnidirectional movable body 1 or the like travelling at the low velocity value Vs (for example, 0.3 m/s) or lower and the operation signal (for example, a muting signal) being input is satisfied, as illustrated in FIG. 9. Further, the operation signal is not limited to the muting signal, and may be a signal for reducing the range of the protection area 401 or a signal for reducing the range of the warning area 402.

This makes it possible to prevent the transport target object 500 being detected as an obstacle by the object detection unit when the omnidirectional movable body 1 or the like travels at a low velocity (the low velocity value Vs or lower) near the position in which the transport target object 500 is disposed. That is, even when the omnidirectional movable body 1 or the like travels at a low velocity, the protection area 401 can be prevented from being reduced unless the omnidirectional movable body 1 or the like is near the position in which the transport target object 500 is disposed. Therefore, it is possible to curb the range of the protection area 401 being reduced and the safety being degraded in positions other than near the transport target object 500. Further, since the range of the protection area 401 can be reduced at a more appropriate timing, it is possible to improve the efficiency of the transport that is performed by the omnidirectional movable body 1 or the like. Further, since the threshold value of protective stop velocity Vt can be prevented from being decreased except near the transport target object 500, it is possible to make it difficult for the omnidirectional movable body 1 to make an protective stop. This makes it possible to curb a degradation in the movement efficiency of the omnidirectional movable body 1.

(Stopping when abnormality is detected)

The stopping unit stops the omnidirectional movable body 1 or the like when a calculation value indicating a state of the drive wheels calculated by using the respective rotational velocities of the drive wheels is equal to or greater than a threshold value indicating an abnormality. The calculation value indicating the state of the drive wheels calculated by using the respective rotational velocities of the drive wheels is, for example, an absolute value "|h|" of a value "h" that is obtained by Equation (5) described above. The threshold value indicating an abnormality is, for example, "ξ" in Equation (6) described above. The stopping unit stops the omnidirectional movable body 1 or the like when the calculation value "|h|" is equal to or greater than the threshold value "ξ" indicating an abnormality.

This makes it possible to stop the omnidirectional movable body 1 or the like when there is a rotation abnormality in the omnidirectional movable body 1 or the like or there is an abnormality in the rotational velocity detector 13. Therefore, it is possible to further improve the safety.

(Other examples of stop when abnormality is detected)

The stopping unit stops the omnidirectional movable body 1 or the like on the basis of a difference between each rotational velocity indicated by a velocity command value of each drive wheel and the rotational velocity of each drive wheel detected by the rotational velocity detection unit. Specifically, as another method for detecting the rotation abnormality or the abnormality in the rotational velocity detector 13, the stopping unit may regard as an abnormality when the difference between the target value of the rotational velocity based on the instruction of the main controller 22 and the actual number of rotations of the wheel detected by the rotational velocity detection unit is greater than the predetermined threshold value, and detect the abnormality.

Thus, it is possible to stop the omnidirectional movable body 1 or the like when there is a rotation abnormality in the omnidirectional movable body 1 or the like or when there is an abnormality in the rotational velocity detector 13. Therefore, it is possible to further improve the safety.

(Example in which averaging filter is used)

The changing unit changes the range of the monitoring area 400 and the threshold value of protective stop velocity on the basis of whether or not the state indicated by the calculation value calculated using the rotational velocity of each drive wheel continues for a certain period of time. The state indicated by the calculation value calculated using the rotational velocity is, for example, the state indicating the rotation abnormality, that is, a state in which the calculation value "|h|" indicating the state of the drive wheels is equal to or greater than the threshold value "ξ" indicating the abnormality, as illustrated in FIG. 15. For example, an averaging filter is used for a determination as to whether or not the state continues for a certain period of time. The changing unit reduces the range of the protection area 401 and decreases the threshold value of protective stop velocity when the omnidirectional movable body 1 travels at a low velocity (the low velocity value Vs or lower) in a case in which the calculation value "|h|" indicating the state of the drive wheels being equal to or greater than the threshold value "ξ" indicating an abnormality does not continue for a certain period of time or longer.

On the other hand, when the calculation value "|h|" indicating the state of the drive wheels being equal to or greater than the threshold value "ξ" indicating an abnormality continues for the certain period of time or longer, the omnidirectional movable body 1 or the like is stopped regardless of whether or not the omnidirectional movable body 1 has traveled at a low velocity. This makes it possible to curb an abnormality in rotation being determined and the omnidirectional movable body 1 being stopped due to noise or temporary wheel slippage.

The state of continuity for the certain period of time is not limited to the state indicating an abnormality in the rotation. The state of continuity for the certain period of time may be, for example, a state in which the velocity of the omnidirectional movable body 1 or the like is equal to or lower than the low velocity value Vs (for example, 0.3 m/s) indicating a low velocity, a state in which the omnidirectional movable body 1 retreats (for example, the main movement velocity Vx < 0), or a state indicating the specific operation before entrance to the docking mode. When these states continue for a certain period of time, the protection area 401 and the threshold value of protective stop velocity may be changed.

This makes it possible to curb these states being determined and the protection area 401 being reduced due to noise or the like. Therefore, it is possible to curb the protection area 401 being reduced at an inappropriate timing, and to further improve the safety. Further, since it is possible to curb the threshold value of protective stop velocity being decreased at an inappropriate timing, it is possible to curb the movement efficiency of the omnidirectional movable body 1 being decreased.

(Monitoring of velocity at time other than time of docking)

Although a case in which the change of the monitoring area 400 and the threshold value of protective stop velocity have been performed at the time of docking has been described, the change may be performed at a time other than the time of docking. For example, the change of the monitoring area 400 may be performed only according to the velocity. For example, when the omnidirectional movable body 1 or the like travels at the low velocity value Vs (for example, 0.3 m/s) or lower, the range of the warning area 402 may be reduced and the threshold value of protective stop velocity may be decreased. When the omnidirectional movable body 1 or the like travels at a velocity (high velocity) exceeding a velocity indicating a low velocity, the range of the warning area 402 may be widened and the threshold value of protective stop velocity may be returned to the original value.

Here, since a magnitude of harm at the time of a collision depends on kinetic energy of the omnidirectional movable body 1 or the like, it is a general principle to decrease the velocity when there is concern that a collision with a person occurs. Further, from the viewpoint of processing time for avoiding the collision, when the movement is at high velocity, time from non-contact detection of an obstacle to physical contact is short, and an operation of avoiding the collision cannot be performed in time. On the other hand, when the movement is at a low velocity, the operation of avoiding the collision can be performed in time. Therefore, it is possible to improve the safety at times other than the time of docking by performing monitoring of the velocity such as changing the range of the monitoring area 400 according to the velocity of the omnidirectional movable body 1 or the like.

(Example of use of velocity monitoring)

Here, the normal control system Nr may control the muting of the safety laser scanner 31. Specifically, the velocity monitoring module 32 may stop the omnidirectional movable body 1 or the like when the omnidirectional movable body 1 or the like exceeds a first velocity (a velocity limit) in a state in which the range of the protection area 401 of the safety laser scanner has been reduced. Further, the velocity monitoring module 32 may stop the omnidirectional movable body 1 or the like when the omnidirectional movable body 1 or the like exceeds a second velocity (threshold value of protective stop velocity) regardless of a size of the protection area 401 of the safety laser scanner 31 and a muting state.

(Release of protection area 401 and threshold value of protective stop velocity)

In the above-described description, a condition for changing the protection area 401 and the threshold value of protective stop velocity has been that the operation signal (muting signal) is input from the main controller 22 or that the movement velocity of the omnidirectional movable body 1 or the like is equal to or lower than the threshold value (for example, the low velocity value Vs or lower). A condition for releasing the changed protection area 401 and threshold value of protective stop velocity is that the operation signal (muting signal) is not input from the main controller 22 or that the movement velocity of the omnidirectional movable body 1 or the like exceeds the threshold value.

The safety laser scanner 31 receives the switching signal from the velocity monitoring module 32 and reduces the protection area 401. Further, the safety laser scanner 31 returns the reduced range of the protection area 401 to the normal range when the output of the switching signal from the velocity monitoring module 32 is released. A threshold value of the movement velocity may differ when the switching signal is output and when the output of the switching signal is released in order to prevent chattering when the range of the protection area 401 is switched.

(Another example of velocity monitoring module 32)

Next, another example of the velocity monitoring module 32 will be described. The case in which the velocity monitoring module 32 includes the changing unit and the stopping unit has been described above. Here, a case in which the velocity monitoring module 32 includes only a changing unit will be described as another example of the velocity monitoring module 32. The velocity monitoring module 32 is connected to the safety laser scanner 31 and used. The safety laser scanner 31 outputs a signal for decelerating or stopping the operation of a machine (for example, the omnidirectional movable body 1 or the like) when a surrounding object is detected in the monitoring area 400.

Further, the velocity monitoring module 32 (the changing unit) is connecting to the safety laser scanner 31 and used, and changes the range of the monitoring area 400 of the safety laser scanner 31. The velocity monitoring module 32 inputs rotational velocity signals from three or more independent rotational velocity detectors 13. The velocity monitoring module 32 outputs a signal for changing the range of the monitoring area 400 on the basis of each input rotational velocity signal. Accordingly, the safety laser scanner 31 changes the range of the monitoring area 400. Further, the velocity monitoring module 32 changes the threshold value of protective stop velocity of the omnidirectional movable body 1 or the like on the basis of each input rotational velocity signal.

According to such a velocity monitoring module 32, it is possible to change the range of the monitoring area 400 (the protection area 401) and the threshold value of protective stop velocity on the basis of the rotational velocity signal from the rotational velocity detector 13. Therefore, it is possible to reduce the range of the protection area 401 and change the threshold value of protective stop velocity with a simple configuration without providing a plurality of sensors or the like. Therefore, it is possible to curb the transport target object 500 being discriminated as an obstacle near the transport target object 500 and the machine (the omnidirectional movable body 1) stopping or curb the machine operating at the movement velocity equal to or higher than the second threshold value of protective stop velocity. As a result, it is possible to improve the safety of the machine. Therefore, according to another example of the velocity monitoring module 32, it is possible to easily and appropriately operate the machine.

(Surrounding object detector)

Next, a surrounding object detector will be mainly described. The surrounding object detector has, for example, a function of the object detection unit described above. Specifically, the surrounding object detector is realized by, for example, the safety laser scanner 31. When the surrounding object detector has detected a surrounding object within the monitoring area 400, the surrounding object detector outputs a signal for decelerating or stopping an operation of a machine (for example, the omnidirectional movable body 1 or the like).

Further, the surrounding object detector changes the range of the monitoring area 400 on the basis of the respective rotational velocity signals output from three or more independent rotational velocity detectors 13. Specifically, the surrounding object detector reduces the range of the protection area 401 in the monitoring area 400, for example, when the velocity of the machine obtained from the rotational velocity signal becomes equal to or lower than the low velocity value Vs (for example, 0.3 m/s).

According to such a surrounding object detector, since the range of the monitoring area 400 (the protection area 401) is changed on the basis of the rotational velocity signal from the rotational velocity detector 13, the range of the protection area 401 can be reduced with a simple configuration without providing a plurality of sensors or the like. Therefore, it is possible to curb the transport target object 500 being discriminated as an obstacle near the transport target object 500 and the machine (the omnidirectional movable body 1) stopping. As a result, it is possible to improve the safety of the machine. Therefore, according to the surrounding object detector, it is possible to easily and appropriately operate the machine using the function of the surrounding object detector.

(Monitoring device)

Next, the monitoring device will be described.

In the above description, a case in which the safety laser scanner 31 and the velocity monitoring module 32 are separately provided has been described. However, the present invention is not limited thereto, and a monitoring device in which the safety laser scanner 31 and the velocity monitoring module 32, which is an example of the control device, are integrally provided may be used. The surrounding object detector described here has, for example, the function of the object detection unit described above. Specifically, the surrounding object detector is realized by, for example, the safety laser scanner 31. When the surrounding object detector detects a surrounding object in the monitoring area 400, the surrounding object detector outputs a signal for decelerating or stopping the omnidirectional movable body 1 or the like including three or more independent drive wheels.

The velocity monitoring module 32 is connected to the surrounding object detector for use, and changes the range of the monitoring area 400 of the surrounding object detector and the threshold value of protective stop velocity. The velocity monitoring module 32 changes the range of the monitoring area 400 and the threshold value of protective stop velocity on the basis of the operation signal output from the main controller 22 that moves the movable body according to the movement plan. Accordingly, the surrounding object detector changes the range of the monitoring area 400.

According to such a monitoring device, it is possible to change the range of the monitoring area 400 (the protection area 401) and the threshold value of protective stop velocity on the basis of the operation signal output from the main controller 22. Therefore, the range of the protection area 401 can be reduced and the threshold value of protective stop velocity can be changed with a simple configuration without providing a plurality of sensors or the like. Therefore, it is possible to curb the transport target object 500 being discriminated as an obstacle near the transport target object 500 and the machine (the omnidirectional movable body 1) stopping or curb the machine operating at a movement velocity equal to or higher than the second threshold value of protective stop velocity when the protection area 401 is reduced. As a result, it is possible to improve the safety of the machine. Therefore, according to the monitoring device, it is possible to easily and appropriately operate the machine.

At least some of the functions of the omnidirectional movable body 1 in the embodiment described above may be realized by a computer. In this case, a program for realizing the functions may be recorded on a computer-readable recording medium. Further, the functions may be realized by loading the program recorded on the recording medium into the computer system and executing the program. The "computer system" referred to herein includes an OS and hardware such as peripheral devices. Further, the "computer-readable recording medium" refers to a storage device such as a hard disk built in a computer system. The storage device also includes a portable medium such as a flexible disk, a magneto-optical disc, a ROM, a CD-ROM, a DVD-ROM, and a USB memory. Further, the "computer-readable recording medium" may include a medium that dynamically holds a program for a short time. Specifically, the "computer-readable recording medium" is a communication line or the like when a program is transmitted via a network such as the Internet or a

# EP 3 968 115 B1

communication line such as a telephone line. Further, the "computer-readable recording medium" may include a medium that holds a program for a certain period of time. Specifically, the "computer-readable recording medium" is, for example, a volatile memory inside a computer system including a server and a client. Further, the program may be a program for realizing some of the above-described functions. Further, the program may be a program that can realize the above-described functions in combination with a program already recorded in the computer system.

As can be appreciated from the above-described embodiments, the following technical issues are avoidable. It is assumed that a velocity command value to be used for velocity control of a movable body movable in all directions is used for a determination as to whether the movable body is at a predetermined velocity or lower. In this case, a velocity indicated by the velocity command value may differ from an actual velocity of the movable body, for example, due to a time delay due to the inertia of a motor control system or the movable body, a delay in signal processing, or an error. Therefore, even if the velocity of the movable body is not actually equal to or lower than the predetermined velocity, when a determination is made that the velocity is equal to or lower than the predetermined velocity, the monitoring area may be reduced. Therefore, it is not possible to appropriately detect obstacles in some cases. Further, when the movable body moves at a high velocity in a state in which the monitoring area is reduced, the movable body cannot be stopped safely in some cases. Therefore, there is concern that the safety of a movable body that can move in all directions may not be able to be guaranteed.

## Claims

1. A control device used for a movable body (1) including:

   three or more drive wheels (11) to be driven independently from each other;
   one or more rotational velocity detection units (13) configured to detect respective rotational velocities of the three or more drive wheels (11);
   a movement velocity detection unit configured to detect a movement velocity of the movable body (1) using the respective rotational velocities detected by the one or more rotational velocity detection units (13);
   an object detection unit (31) configured to detect an object within a monitoring area (400) around the movable body (1);
   a movement control unit (22) configured to move the movable body (1) in accordance with a movement plan;
   a stopping unit (32) configured to stop the movable body (1) when the movement velocity detected by the movement velocity detection unit reaches a threshold value of a protective stop velocity; and
   a changing unit (32) configured to, on the basis of an operation signal output from the movement control unit (22) and of the respective rotational velocities of the drive wheels (11) detected by the one or more rotational velocity detection units (13), reduce or invalidate a range of the monitoring area (400) and set a lower value as the threshold value of the protective stop velocity than a value that is set as the threshold value of the protective stop velocity.

2. The control device according to claim 1, wherein the changing unit (32) is configured to change the range of the monitoring area (400) on the basis of a logical product of the operation signal output and the respective rotational velocities of the drive wheels (11) detected by the one or more rotational velocity detection units (13).

3. The control device according to claim 1, wherein the changing unit (32) is configured to change the threshold value of the protective stop velocity to a different velocity according to a traveling direction of the movable body (1).

4. A movable body (1) comprising:

   three or more drive wheels (11) to be driven independently from each other;
   one or more rotational velocity detection units (13) configured to detect respective rotational velocities of the three or more drive wheels (11);
   a movement velocity detection unit configured to detect a movement velocity of the movable body (1) using the respective rotational velocities detected by the one or more rotational velocity detection units (13);
   an object detection unit (31) configured to detect an object within a monitoring area (400) around the movable body (1);
   a movement control unit (22) configured to move the movable body (1) in accordance with a movement plan;
   a control device according to any one of claims 1-3.

5. The movable body (1) according to claim 4, wherein the drive wheels (11) are four mecanum wheels.

6. A control method comprising:

executing a process by a computer used for a movable body (1) including

three or more drive wheels (11) to be driven independently from each other;

one or more rotational velocity detection units (13) configured to detect respective rotational velocities of the three or more drive wheels (11);

a movement velocity detection unit configured to detect a movement velocity of the movable body (1) using the respective rotational velocities detected by the one or more rotational velocity detection units (13);

an object detection unit (31) configured to detect an object within a monitoring area (400) set around the movable body (1);

a movement control unit (22) configured to move the movable body (1) in accordance with a movement plan, wherein the process includes

stopping the movable body (1) when the movement velocity detected by the movement velocity detection unit reaches a threshold value of a protective stop velocity; and

on the basis of an operation signal output from the movement control unit (22) and of the respective rotational velocities of the drive wheels (11) detected by the one or more rotational velocity detection units (13), reducing or invalidating a range of the monitoring area (400) and setting a lower value as the threshold value of the protective stop velocity than a value that is set as the threshold value of the protective stop velocity.

7. A non-transitory computer-readable storage medium that stores a program causing a computer to execute a process, the computer used for a movable body (1) including

three or more drive wheels (11) to be driven independently from each other;

one or more rotational velocity detection units (13) configured to detect respective rotational velocities of the three or more drive wheels (11);

a movement velocity detection unit configured to detect a movement velocity of the movable body (1) using the respective rotational velocities detected by the one or more rotational velocity detection units (13);

an object detection unit (31) configured to detect an object within a monitoring area (400) set around the movable body (1);

a movement control unit (22) configured to move the movable body (1) in accordance with a movement plan, wherein the process includes

stopping the movable body (1) when the movement velocity detected by the movement velocity detection unit reaches a threshold value of a protective stop velocity; and

on the basis of an operation signal output from the movement control unit (22) and of the respective rotational velocities of the drive wheels (11) detected by the one or more rotational velocity detection units (13), reducing or invalidating a range of the monitoring area (400) and setting a lower value as the threshold value of the protective stop velocity than a value that is set as the threshold value of the protective stop velocity.

**Patentansprüche**

1. Steuervorrichtung für einen beweglichen Körper (1), beinhaltend:

drei oder mehr Antriebsräder (11), die unabhängig voneinander anzutreiben sind;

eine oder mehrere Drehgeschwindigkeits-Detektionseinheiten (13), die so konfiguriert sind, dass sie die jeweiligen Drehgeschwindigkeiten der drei oder mehr Antriebsräder (11) detektieren;

eine Bewegungsgeschwindigkeits-Detektionseinheit, die so konfiguriert ist, dass sie eine Bewegungsgeschwindigkeit des beweglichen Körpers (1) unter Verwendung der jeweiligen Rotationsgeschwindigkeiten detektiert, die von der einen oder den mehreren Drehgeschwindigkeits-Detektionseinheiten (13) detektiert werden;

eine Objekt-Detektionseinheit (31), die so konfiguriert ist, dass sie ein Objekt innerhalb eines Überwachungsbereichs (400) um den beweglichen Körper (1) detektiert;

eine Bewegungssteuerungseinheit (22), die so konfiguriert ist, dass sie den beweglichen Körper (1) in Übereinstimmung mit einem Bewegungsplan bewegt

eine Anhalteeinheit (32), die so konfiguriert ist, dass sie den beweglichen Körper (1) anhält, wenn die von der Bewegungsgeschwindigkeits-Detektionseinheit detektierte Bewegungsgeschwindigkeit einen Schwellenwert einer Schutzanhaltegeschwindigkeit erreicht; und

eine Änderungseinheit (32), die so konfiguriert ist, dass sie auf Basis eines von der Bewegungssteuerungseinheit (22) ausgegebenen Betriebssignals und der jeweiligen Drehgeschwindigkeiten der Antriebsräder (11), die von der einen oder den mehreren Drehgeschwindigkeits-Detektionseinheiten (13) detektiert werden, eine Reichweite des Überwachungsbereichs (400) verkleinert oder ungültig macht und einen niedrigeren Wert als den Schwellenwert der Schutzanhaltegeschwindigkeit einstellt als einen Wert, der als Schwellenwert der Schutzanhaltegeschwindigkeit eingestellt ist.

**2.** Steuervorrichtung gemäß Anspruch 1, wobei die Änderungseinheit (32) so konfiguriert ist, dass sie den Bereich des Überwachungsbereichs (400) auf Basis eines logischen Produkts des Betriebssignalausgangs und der jeweiligen Drehgeschwindigkeiten der Antriebsräder (11), die von der einen oder mehreren Drehgeschwindigkeits-Detektionseinheiten (13) detektiert werden, ändert.

**3.** Steuervorrichtung gemäß Anspruch 1, wobei die Änderungseinheit (32) so konfiguriert ist, dass sie den Schwellenwert der Schutzanhaltegeschwindigkeit entsprechend einer Fahrtrichtung des beweglichen Körpers (1) auf eine andere Geschwindigkeit ändert.

**4.** Beweglicher Körper (1), umfassend:

drei oder mehr Antriebsräder (11), die unabhängig voneinander anzutreiben sind;
eine oder mehrere Drehgeschwindigkeits-Detektionseinheiten (13), die so konfiguriert sind, dass sie die jeweiligen Drehgeschwindigkeiten der drei oder mehr Antriebsräder (11) detektieren;
eine Bewegungsgeschwindigkeits-Detektionseinheit, die so konfiguriert ist, dass sie eine Bewegungsgeschwindigkeit des beweglichen Körpers (1) unter Verwendung der jeweiligen Rotationsgeschwindigkeiten detektiert, die von der einen oder den mehreren Drehgeschwindigkeits-Detektionseinheiten (13) detektiert werden;
eine Objekt-Detektionseinheit (31), die so konfiguriert ist, dass sie ein Objekt innerhalb eines Überwachungsbereichs (400) um den beweglichen Körper (1) detektiert;
eine Bewegungssteuerungseinheit (22), die so konfiguriert ist, dass sie den beweglichen Körper (1) in Übereinstimmung mit einem Bewegungsplan bewegt;
eine Steuervorrichtung gemäß einem der Ansprüche 1-3.

**5.** Beweglicher Körper (1) gemäß Anspruch 4, wobei die Antriebsräder (11) vier mechanische Räder sind.

**6.** Steuerverfahren, umfassend:

Ausführen eines Prozesses durch einen Computer, der für einen beweglichen Körper (1) verwendet wird, der beinhaltet
drei oder mehr Antriebsräder (11), die unabhängig voneinander anzutreiben sind;
eine oder mehrere Drehgeschwindigkeits-Detektionseinheiten (13), die so konfiguriert sind, dass sie die jeweiligen Drehgeschwindigkeiten der drei oder mehr Antriebsräder (11) detektieren;
eine Bewegungsgeschwindigkeits-Detektionseinheit, die so konfiguriert ist, dass sie eine Bewegungsgeschwindigkeit des beweglichen Körpers (1) unter Verwendung der jeweiligen Drehgeschwindigkeiten detektiert, die von der einen oder den mehreren Drehgeschwindigkeits-Detektionseinheiten (13) detektiert werden;
eine Objekt-Detektionseinheit (31), die so konfiguriert ist, dass sie ein Objekt innerhalb eines Überwachungsbereichs (400) detektiert, der um den beweglichen Körper (1) herum angeordnet ist eine Bewegungssteuerungseinheit (22), die so konfiguriert ist, dass sie den beweglichen Körper (1) in Übereinstimmung mit einem Bewegungsplan bewegt,
wobei der Prozess beinhaltet
Anhalten des beweglichen Körpers (1), wenn die von der Bewegungsgeschwindigkeits-Detektionseinheit detektierte Bewegungsgeschwindigkeit einen Schwellenwert einer Schutzanhaltegeschwindigkeit erreicht; und
auf Basis eines von der Bewegungssteuerungseinheit (22) ausgegebenen Betriebssignals und der jeweiligen Drehgeschwindigkeiten der Antriebsräder (11), die von der einen oder den mehreren Drehgeschwindigkeits-Detektionseinheiten (13) detektiert werden, eine Reichweite des Überwachungsbereichs (400) zu verringern oder ungültig zu machen und einen niedrigeren Wert als den Schwellenwert der Schutzanhaltegeschwindigkeit einzustellen als einen Wert, der als Schwellenwert der Schutzanhaltegeschwindigkeit eingestellt ist.

**7.** Nicht-transitorisches computerlesbares Speichermedium, das ein Programm speichert, das einen Computer veranlasst, einen Prozess auszuführen, wobei der Computer für einen beweglichen Körper (1) verwendet wird, der beinhaltet

drei oder mehr Antriebsräder (11), die unabhängig voneinander anzutreiben sind;

eine oder mehrere Drehgeschwindigkeits-Detektionseinheiten (13), die so konfiguriert sind, dass sie die jeweiligen Drehgeschwindigkeiten der drei oder mehr Antriebsräder (11) detektieren;

eine Bewegungsgeschwindigkeits-Detektionseinheit, die so konfiguriert ist, dass sie eine Bewegungsgeschwindigkeit des beweglichen Körpers (1) unter Verwendung der jeweiligen Rotationsgeschwindigkeiten detektiert, die von der einen oder den mehreren Drehgeschwindigkeits-Detektionseinheiten (13) detektiert werden;

eine Objekt-Detektionseinheit (31), die so konfiguriert ist, dass sie ein Objekt innerhalb eines Überwachungsbereichs (400) detektiert, der um den beweglichen Körper (1) herum angeordnet ist;

eine Bewegungssteuerungseinheit (22), die so konfiguriert ist, dass sie den beweglichen Körper (1) in Übereinstimmung mit einem Bewegungsplan bewegt,

wobei der Prozess beinhaltet

Anhalten des beweglichen Körpers (1), wenn die von der Bewegungsgeschwindigkeits-Detektionseinheit detektierte Bewegungsgeschwindigkeit einen Schwellenwert einer Schutzanhaltegeschwindigkeit erreicht; und auf Basis eines von der Bewegungssteuerungseinheit (22) ausgegebenen Betriebssignals und der jeweiligen Drehgeschwindigkeiten der Antriebsräder (11), die von der einen oder den mehreren Drehgeschwindigkeits-Detektionseinheiten (13) detektiert werden, eine Reichweite des Überwachungsbereichs (400) zu verringern oder ungültig zu machen und einen niedrigeren Wert als den Schwellenwert der Schutzanhaltegeschwindigkeit einzustellen als einen Wert, der als Schwellenwert der Schutzanhaltegeschwindigkeit eingestellt ist.

**Revendications**

1.  Un dispositif de commande utilisé pour un corps mobile (1) comprenant :

    trois roues motrices (11) ou plus destinées à être entraînées indépendamment les unes des autres ;
    une ou plusieurs unités de détection de vitesse de rotation (13) configurées pour détecter des vitesses de rotation respectives des trois roues motrices (11) ou plus ;
    une unité de détection de vitesse de déplacement configurée pour détecter une vitesse de déplacement du corps mobile (1) à l'aide des vitesses de rotation respectives détectées par la ou les unités de détection de vitesse de rotation (13) ;
    une unité de détection d'objet (31) configurée pour détecter un objet dans une zone de surveillance (400) autour du corps mobile (1) ;
    une unité de commande de déplacement (22) configurée pour déplacer le corps mobile (1) conformément à un plan de déplacement ;
    une unité d'arrêt (32) configurée pour arrêter le corps mobile (1) lorsque la vitesse de déplacement détectée par l'unité de détection de vitesse de déplacement atteint une valeur seuil d'une vitesse d'arrêt de protection ; et
    une unité de modification (32) configurée pour, sur la base d'un signal de fonctionnement émis par l'unité de commande de déplacement (22) et sur la base des vitesses de rotation respectives des roues motrices (11) détectées par la ou les unités de détection de vitesse de rotation (13), réduire ou invalider une plage de la zone de surveillance (400) et définir une valeur inférieure comme la valeur seuil de la vitesse d'arrêt de protection par rapport à une valeur qui est définie comme La valeur seuil de la vitesse d'arrêt de protection.

2.  Le dispositif de commande selon la revendication 1, dans lequel l'unité de modification (32) est configurée pour modifier la plage de la zone de surveillance (400) sur la base d'un produit logique du signal de fonctionnement émis et des vitesses de rotation respectives des roues motrices (11) détectées par la ou les unités de détection de vitesse de rotation (13).

3.  Le dispositif de commande selon la revendication 1, dans lequel l'unité de modification (32) est configurée pour modifier la valeur seuil de la vitesse d'arrêt de protection à une vitesse différente en fonction d'une direction de déplacement du corps mobile (1).

4.  Un corps mobile (1) comprenant :

    trois roues motrices (11) ou plus destinées à être entraînées indépendamment les unes des autres ;
    une ou plusieurs unités de détection de vitesse de rotation (13) configurées pour détecter des vitesses de rotation respectives des trois roues motrices (11) ou plus ;
    une unité de détection de vitesse de déplacement configurée pour détecter une vitesse de déplacement du corps mobile (1) à l'aide des vitesses de rotation respectives détectées par la ou les unités de détection de vitesse de rotation (13) ;

une unité de détection d'objet (31) configurée pour détecter un objet dans une zone de surveillance (400) autour du corps mobile (1) ;

une unité de commande de déplacement (22) configurée pour déplacer le corps mobile (1) conformément à un plan de déplacement ;

un dispositif de commande selon l'une quelconque des revendications 1 à 3.

**5.** Le corps mobile (1) selon la revendication 4, dans lequel les roues motrices (11) sont quatre roues mecanum.

**6.** Un procédé de commande comprenant :

l'exécution d'un processus par un ordinateur utilisé pour un corps mobile (1) comprenant

trois roues motrices (11) ou plus destinées à être entraînées indépendamment les unes des autres ;

une ou plusieurs unités de détection de vitesse de rotation (13) configurées pour détecter des vitesses de rotation respectives des trois roues motrices (11) ou plus ;

une unité de détection de vitesse de déplacement configurée pour détecter une vitesse de déplacement du corps mobile (1) à l'aide des vitesses de rotation respectives détectées par la ou les unités de détection de vitesse de rotation (13) ;

une unité de détection d'objet (31) configurée pour détecter un objet dans une zone de surveillance (400) définie autour du corps mobile (1) ;

une unité de commande de déplacement (22) configurée pour déplacer le corps mobile (1) conformément à un plan de déplacement,

dans lequel le processus comprend

l'arrêt du corps mobile (1) lorsque la vitesse de déplacement détectée par l'unité de détection de vitesse de déplacement atteint une valeur seuil d'une vitesse d'arrêt de protection ; et

sur la base d'un signal de fonctionnement émis par l'unité de commande de déplacement (22) et des vitesses de rotation respectives des roues motrices (11) détectées par la ou les unités de détection de vitesse de rotation (13), la réduction ou l'invalidation d'une plage de la zone de surveillance (400) et la définition d'une valeur inférieure comme la valeur seuil de la vitesse d'arrêt de protection par rapport à une valeur qui est définie comme la valeur seuil de la vitesse d'arrêt de protection.

**7.** Un support de stockage non transitoire lisible par ordinateur qui stocke un programme amenant un ordinateur à exécuter un processus, l'ordinateur étant utilisé pour un corps mobile (1) comprenant

trois roues motrices (11) ou plus destinées à être entraînées indépendamment les unes des autres ;

une ou plusieurs unités de détection de vitesse de rotation (13) configurées pour détecter des vitesses de rotation respectives des trois roues motrices (11) ou plus ;

une unité de détection de vitesse de déplacement configurée pour détecter une vitesse de déplacement du corps mobile (1) à l'aide des vitesses de rotation respectives détectées par la ou les unités de détection de vitesse de rotation (13) ;

une unité de détection d'objet (31) configurée pour détecter un objet dans une zone de surveillance (400) définie autour du corps mobile (1) ;

une unité de commande de déplacement (22) configurée pour déplacer le corps mobile (1) conformément à un plan de déplacement,

dans lequel le processus comprend

l'arrêt du corps mobile (1) lorsque la vitesse de déplacement détectée par l'unité de détection de vitesse de déplacement atteint une valeur seuil d'une vitesse d'arrêt de protection ; et

sur la base d'un signal de fonctionnement émis par l'unité de commande de déplacement (22) et des vitesses de rotation respectives des roues motrices (11) détectées par la ou les unités de détection de vitesse de rotation (13), la réduction ou l'invalidation d'une plage de la zone de surveillance (400) et la définition d'une valeur inférieure comme la valeur seuil de la vitesse d'arrêt de protection par rapport à une valeur qui est définie comme la valeur seuil de la vitesse d'arrêt de protection.

*FIG. 1A*

*FIG. 1B*

FIG. 1C

MANUAL SWITCH

31 OSSD

PROTECTION AREA

WARNING AREA

Sf

WNG

AREA SWITCHING

Muting

POWER CONTROL CIRCUIT

33

CIRCUIT BREAKER

OSSD

VELOCITY MONITORING MODULE

32

24V

31b

22

MAIN CONTROLLER

MOTOR CONTROL SIGNAL

MOTOR CONTROL CIRCUIT

DRIVE MOTOR Φ1

11

ROTATIONAL VELOCITY DETECTOR

Nr

WNG

MOTOR CONTROL SIGNAL

MOTOR CONTROL CIRCUIT

DRIVE MOTOR Φ2

ROTATIONAL VELOCITY DETECTOR

12

MOTOR CONTROL CIRCUIT

DRIVE MOTOR Φ3

ROTATIONAL VELOCITY DETECTOR

13

23

MOTOR CONTROL CIRCUIT

DRIVE MOTOR Φ4

ROTATIONAL VELOCITY DETECTOR

Sg

EP 3 968 115 B1

*FIG. 2*

*FIG. 3*

## FIG. 4

## FIG. 5A

## FIG. 5B

# FIG. 5C

## FIG. 6

*FIG. 7*

700

|φ1|    < N

|φ2|    < N

|φ3|    < N

|φ4|    < N

AND CONDITION

PROTECTION AREA SWITCHING SIGNAL

CHANGE THRESHOLD VALUE OF PROTECTIVE STOP VELOCITY

## FIG. 8

```
                    ┌──────────┐
                    │    S     │
                    └────┬─────┘
                         │         S801
                  ┌──────▼──────────┐
                  │  Vs OR LOWER    │
                  └──────┬──────────┘
                         │         S802
                  ┌──────▼──────────────────┐
                  │ REDUCE PROTECTION AREA  │
                  └──────┬──────────────────┘
                         │         S803
                  ┌──────▼──────────┐
                  │   CHANGE Vt     │
                  └──────┬──────────┘
                         │         S804
        NO        ╱──────▼──────╲
      ◄───────────   V ≧ Vt ?    
                    ╲─────────────╱
                         │ YES     S805
                  ┌──────▼──────────┐
                  │OUTPUT PROTECTIVE│
                  │  STOP SIGNAL    │
                  └──────┬──────────┘
                         │         S806
                    ╱────▼─────╲
                    HAS
              REDUCTION OF          NO
          PROTECTION AREA BEEN ──────►
               RELEASED
                    ?
                    ╲──────────╱
                         │ YES     S807
                  ┌──────▼──────────┐
                  │   RETURN Vt     │
                  └──────┬──────────┘
                         │
                    ┌────▼─────┐
                    │   END    │
                    └──────────┘
```

*FIG. 9*

## FIG. 10

```
        ( S )                              ( S )
          |                                  |
          | ~S1001                           |
  [ START DOCKING MODE ]                      |
          |                                   |
          | ~S1002                            | ~S1003
  [ OUTPUT MUTING SIGNAL ]            [ Vs OR LOWER ]
          |                                   |
          +------------> (X) <----------------+
                          AND CONDITION
                          | ~S1004
              [ REDUCE PROTECTION AREA ]
                          |
                          | ~S1005
                   [ CHANGE Vt ]
                          |
                          | ~S1006
         NO          < V ≧ Vt ? >
          +<----------------|
          |                 | YES  ~S1007
          |        [ OUTPUT PROTECTIVE
          |            STOP SIGNAL ]
          +--------------->|
                           | ~S1008
                  < HAS AND CONDITION
                       ENDED? >          NO
                           |------------>
                           | YES  ~S1009
                    [ RETURN Vt ]
                           |
                       ( END )
```

## FIG. 11

1100

$|\phi1|$    < N    Y

$|\phi2|$    < N    Y

700

$|\phi3|$    < N    Y

AND
CONDITION

$|\phi4|$    < N    Y

PROTECTION AREA
SWITCHING SIGNAL

$-\phi1-\phi2+\phi3+\phi4$    < 0

OR
CONDITION

CHANGE THRESHOLD
VALUE OF PROTECTIVE
STOP VELOCITY

*FIG. 12*

S

S1201

Vs OR LOWER

S

S1202

$-(\phi 1 + \phi 2) + (\phi 3 + \phi 4) < 0?$
$(Vx < 0?)$

⊗ OR CONDITION

S1203

REDUCE PROTECTION AREA

S1204

CHANGE Vt

S1205

NO ◇ $V \geqq Vt?$

YES  S1206

OUTPUT PROTECTIVE
STOP SIGNAL

S1207

HAS OR
CONDITION BEEN
SATISFIED?  NO

YES  S1208

RETURN Vt

END

## FIG. 13

## FIG. 14

*FIG. 15*

## FIG. 16

## FIG.17

*FIG. 18*

1800

|φ1| — < Q

|φ2| — < Q — AND CONDITION — CHANGE THRESHOLD VALUE OF PROTECTIVE STOP VELOCITY

|φ3| — < Q — PROTECTION AREA SWITCHING SIGNAL

## FIG. 19

```
                    ( S )
                      │  S1901
         ┌────────────▼─────────────┐
         │ START PREDETERMINED OPERATION │
         └────────────┬─────────────┘
                      │  S1902
            ┌─────────▼──────────┐
            │ OUTPUT OPERATION SIGNAL │
            └─────────┬──────────┘
                      │  S1903
             ┌────────▼─────────┐
             │ REDUCE PROTECTION AREA │
             └────────┬─────────┘
                      │  S1904
      ┌───────────────▼────────────────┐
      │ CHANGE Vt IN SPECIFIC DIRECTION │
      └───────────────┬────────────────┘
                      │          ◄──────────────┐
                      │   S1905                 │
           NO       ◇─▼─────◇                   │
        ◄───────────  V≧Vt?                     │
                     ◇───────◇                  │
                      │ YES   S1906             │
            ┌─────────▼──────────┐              │
            │  OUTPUT PROTECTIVE  │             │
            │    STOP SIGNAL      │             │
            └─────────┬──────────┘             │
                      │   S1907                 │
                  ◇───▼────◇                    │
                  ◇  HAS    ◇                   │
                  ◇ REDUCTION ◇    NO           │
                  ◇OF PROTECTION AREA ◇─────────┘
                  ◇ BEEN RELEASED ◇
                  ◇    ?    ◇
                      │ YES   S1908
                ┌─────▼──────┐
                │ RETURN Vt  │
                └─────┬──────┘
                      │
                   ( END )
```

## FIG. 20

Limit
1.1 m/s

510

401

Limit
0.3 m/s

Limit
0.3 m/s

31

1

Limit
0.3 m/s

## FIG. 21

510

401

Limit
0.5 m/s

Limit
0.3 m/s

Limit
0.5 m/s

Limit
0.2 m/s

31

1

Limit
0.2 m/s

**REFERENCES CITED IN THE DESCRIPTION**

**Patent documents cited in the description**

- US 2020290603 A1
- EP 3617828 A1
- US 2011077814 A1
- US 2016236347 A1